(19) Europäisches Patentamt
European Patent Office
Office européen des brevets

(11) EP 4 331 837 A1

(12) **EUROPEAN PATENT APPLICATION**
published in accordance with Art. 153(4) EPC

(43) Date of publication:
**06.03.2024 Bulletin 2024/10**

(21) Application number: **22795401.3**

(22) Date of filing: **24.03.2022**

(51) International Patent Classification (IPC):
***B32B 25/04*** (2006.01) ***B32B 27/30*** (2006.01)
***C08L 25/02*** (2006.01) ***C08L 53/00*** (2006.01)
***C08L 53/02*** (2006.01) ***C08L 91/02*** (2006.01)

(52) Cooperative Patent Classification (CPC):
**B32B 25/04; B32B 27/30; C08L 25/02; C08L 53/00; C08L 53/02; C08L 91/02**

(86) International application number:
**PCT/JP2022/014113**

(87) International publication number:
**WO 2022/230482 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2021 JP 2021075226**

(71) Applicant: **Kuraray Co., Ltd.**
**Kurashiki-shi, Okayama 710-0801 (JP)**

(72) Inventors:
- **KAWAHARA, Moe**
**Tsukuba-shi, Ibaraki 305-0841 (JP)**
- **HIRAKATA, Shutaro**
**Tokyo 100-0004 (JP)**
- **OKUMURA, Nao**
**Tsukuba-shi, Ibaraki 305-0841 (JP)**

(74) Representative: **Müller-Boré & Partner Patentanwälte PartG mbB**
**Friedenheimer Brücke 21**
**80639 München (DE)**

(54) **THERMOPLASTIC ELASTOMER COMPOSITION, MOLDED ARTICLE, LAYERED STRUCTURE, AND METHOD FOR PRODUCING SAID LAYERED STRUCTURE**

(57) Provided are: a thermoplastic elastomer composition having excellent transparency and high hardness and excellent flexibility indicated by high tensile strain at break as well as capable of providing excellent strength of adhesion even to highly polar materials; a molding; a laminated structure; and a method for producing the laminated structure. Disclosed is a thermoplastic elastomer composition comprising, 100 parts by mass of a hydrogenated block copolymer (A), 185 to 1500 parts by mass of an acrylic polymer (B), 5 to 150 parts by mass of an aromatic polymer (C) (excluding the hydrogenated block copolymer (A) and the acrylic polymer (B)), and 70 to 300 parts by mass of a softening agent (D), wherein the hydrogenated block copolymer (A) is a hydrogenated product of a block copolymer (P) having two or more polymer blocks (a1) containing a structural unit derived from an aromatic vinyl compound and one or more polymer blocks (a2) containing a structural unit derived from a conjugated diene, provided that the polymer blocks (a1) have a content in a range of 3 to 45 mass%, and wherein a mass ratio [(C)/(B)] between the aromatic polymer (C) and the acrylic polymer (B) is from 0.01 to 0.19.

EP 4 331 837 A1

## Description

### Technical Field

The present invention relates to a thermoplastic elastomer composition, a molding, a laminated structure, and a method for producing the laminated structure.

### Background Art

Thermoplastic elastomer compositions containing a styrene-based thermoplastic elastomer have conventionally been excellent in moldability, and have thus been used for various members such as home electric appliances, electronic components, automobile components, and mechanical components as moldings obtained by hot melt molding such as injection molding or extrusion molding. Here, the styrene-based thermoplastic elastomer refers to a block copolymer having a polymer block containing a structural unit derived from an aromatic vinyl compound and a polymer block containing a structural unit derived from a conjugated diene. In these members, for the purpose of improving physical properties, for example, different materials may be bonded to each other or composited to produce each member for use. In this case, the member should be obtained as a desired molding produced by, for example, dichroic molding or co-extrusion.

However, the styrene-based thermoplastic elastomer is a material having low polarity, and thus causes a problem that the strength of adhesion to a highly polar material such as a polar resin, ceramic, or metal is insufficient.

As a means for solving this problem, a composition has been disclosed in which a styrene-based thermoplastic elastomer is admixed with a highly polar soft polymer such as an acrylic block copolymer having a polymer block containing a structural unit derived from an acrylic acid ester and a polymer block containing a structural unit derived from a methacrylic acid ester (see, for example, Patent Literature 1). Also disclosed is a thermoplastic elastomer composition containing a specific hydrogenated block copolymer (A), a specific acrylic block copolymer (B), an aromatic polymer (C), and a softening agent (D) at specific ratios (see, for example, Patent Literature 2).

### Citation List

### Patent Literature

Patent Literature 1: JP 2019-157067 A
Patent Literature 2: JP 2020-139156 A

### Summary of Invention

### Technical Problem

The composition disclosed in Patent Literature 1 is an excellent composition in view of exhibiting excellent adhesion to polar materials. However, there is room for improvement in the transparency of the composition.

In addition, the thermoplastic elastomer composition disclosed in Patent Literature 2 is excellent in flexibility, tensile properties, and transparency. This thermoplastic elastomer composition excels in having excellent strength of adhesion even to highly polar materials. However, there is room for improvement in order to obtain a material having flexibility as well as high hardness (e.g., a material having excellent gripping performance) while having transparency. In addition, there is also room for improvement in order to further improve the strength of adhesion to highly polar materials.

The present invention has been made in view of the above circumstances, and the purpose of the present invention is to provide: a thermoplastic elastomer composition having excellent transparency and high hardness and excellent flexibility indicated by high tensile strain at break as well as capable of providing excellent strength of adhesion even to highly polar materials; a molding; a laminated structure; and a method for producing the laminated structure.

### Solution to Problem

The present invention provides the following items [1] to [13].

[1] A thermoplastic elastomer composition comprising, 100 parts by mass of a hydrogenated block copolymer (A), 185 to 1500 parts by mass of an acrylic polymer (B), 5 to 150 parts by mass of an aromatic polymer (C) (excluding

the hydrogenated block copolymer (A) and the acrylic polymer (B)), and 70 to 300 parts by mass of a softening agent (D),

wherein the hydrogenated block copolymer (A) is a hydrogenated product of a block copolymer (P) having two or more polymer blocks (a1) containing a structural unit derived from an aromatic vinyl compound and one or more polymer blocks (a2) containing a structural unit derived from a conjugated diene, provided that the polymer blocks (a1) have a content in a range of 3 to 45 mass%, and
wherein a mass ratio [(C)/(B)] between the aromatic polymer (C) and the acrylic polymer (B) is from 0.01 to 0.19.

[2] The thermoplastic elastomer composition according to [1], wherein the acrylic polymer (B) contains 35 to 100 mass% of an acrylic block copolymer (B1) having a polymer block (b1) composed of an acrylic acid ester unit and a polymer block (b2) composed of a methacrylic acid ester unit.
[3] The thermoplastic elastomer composition according to [2], wherein the acrylic block copolymer (B1) has a peak top molecular weight in a range of 50,000 to 180,000.
[4] The thermoplastic elastomer composition according to any one of [1] to [3], wherein the aromatic polymer (C) is a polymer containing a structural unit derived from at least one aromatic vinyl compound selected from the group consisting of styrene, $\alpha$-methylstyrene, and 4-methylstyrene.
[5] The thermoplastic elastomer composition according to any one of [1] to [4], wherein the softening agent (D) is at least one kind selected from the group consisting of paraffinic oil, naphthenic oil, and aromatic oil.
[6] The thermoplastic elastomer composition according to any one of [2] to [5], wherein the acrylic block copolymer (B1) has a molecular weight distribution in a range of 1.0 to 1.4.
[7] The thermoplastic elastomer composition according to any one of [2] to [6], wherein the acrylic block copolymer (B1) is a triblock copolymer in which the polymer block (b2) is bonded to each end of the polymer block (b1).
[8] The thermoplastic elastomer composition according to any one of [2] to [7], wherein the polymer block (b2) in the acrylic block copolymer (B1) has a content in a range of 5 to 55 mass%.
[9] The thermoplastic elastomer composition according to any one of [2] to [8], wherein the structural unit derived from the acrylic acid ester contained in the polymer block (b1) comprises a structural unit derived from an acrylic acid ester (b1-1) represented by general formula $CH_2=CH-COOR^1$ (1) (where $R^1$ represents a $C_{1-3}$ organic group) and a structural unit derived from an acrylic acid ester (b1-2) represented by general formula $CH_2=CH-COOR^2$ (2) (where $R^2$ represents a $C_{4-12}$ organic group), and a mass ratio (b1-1)/(b1-2) between the structural unit derived from the acrylic acid ester (b1-1) and the structural unit derived from the acrylic acid ester (b1-2) ranges from 90/10 to 5/95.
[10] The thermoplastic elastomer composition according to any one of [1] to [9], further comprising 0.1 to 60 parts by mass of a hydrophilic group-containing block copolymer (E) (where the hydrogenated block copolymer (A), the acrylic polymer (B), and the aromatic polymer (C) are excluded) based on 100 parts by mass of the hydrogenated block copolymer (A).
[11] A molding comprising the thermoplastic elastomer composition according to any one of [1] to [10].
[12] A laminated structure comprising a layer formed of the thermoplastic elastomer composition according to any one of [1] to [10] and a layer formed of a material other than the thermoplastic elastomer composition.
[13] A method for producing a laminated structure, the method comprising melt lamination molding the thermoplastic elastomer composition according to any one of [1] to [10] onto a layer formed of a material other than the thermoplastic elastomer composition.

Advantageous Effects of Invention

The present invention can provide: a thermoplastic elastomer composition having excellent transparency and high hardness and excellent flexibility indicated by high tensile strain at break as well as capable of providing excellent strength of adhesion even to highly polar materials; a molding; a laminated structure; and a method for producing the laminated structure.

Description of Embodiments

As used herein, the term "(meth)acrylic acid ester" means "methacrylic acid ester" or "acrylic acid ester", and "(meth)acrylic" means "methacrylic" or "acrylic".

[Thermoplastic Elastomer Composition]

A thermoplastic elastomer composition according to the present invention comprises, 100 parts by mass of a hydrogenated block copolymer (A), 185 to 1500 parts by mass of an acrylic polymer (B), 5 to 150 parts by mass of an

aromatic polymer (C) (excluding the hydrogenated block copolymer (A) and the acrylic polymer (B)), and 70 to 300 parts by mass of a softening agent (D),

wherein the hydrogenated block copolymer (A) is a hydrogenated product of a block copolymer (P) having two or more polymer blocks (a1) containing a structural unit derived from an aromatic vinyl compound and one or more polymer blocks (a2) containing a structural unit derived from a conjugated diene, provided that the polymer blocks (a1) have a content in a range of 3 to 45 mass%, and
wherein a mass ratio [(C)/(B)] between the aromatic polymer (C) and the acrylic polymer (B) is from 0.01 to 0.19.

<Hydrogenated Block Copolymer (A)>

The hydrogenated block copolymer (A) (hereinafter, also simply referred to as "hydrogenated block copolymer (A)") is a hydrogenated product of a block copolymer (P) having two or more polymer blocks (a1) containing a structural unit derived from an aromatic vinyl compound and one or more polymer blocks (a2) containing a structural unit derived from a conjugated diene, provided that the polymer blocks (a1) have a content in the range of 3 to 45 mass%.

[Polymer Block (a1)]

The polymer block (a1) contains a structural unit derived from an aromatic vinyl compound. Examples of such an aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl) styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, or divinylbenzene. One kind of these aromatic vinyl compounds may be used singly, or two or more kinds thereof may be used in combination. Among them, preferred is styrene, α-methylstyrene, or 4-methylstyrene, and more preferred is styrene.

The polymer block (a1) may contain a structural unit derived from a monomer other than the aromatic vinyl compound, for example, another monomer such as a monomer constituting the polymer block (a2) described later. However, the content of the structural unit derived from the aromatic vinyl compound in the polymer block (a1) is preferably 60 mass% or higher, more preferably 70 mass% or higher, still more preferably 80 mass% or higher, still more preferably 90 mass% or higher, and particularly preferably 100 mass%.

[Polymer Block (a2)]

The polymer block (a2) contains a structural unit derived from a conjugated diene. Examples of such a conjugated diene include butadiene, isoprene, 2,3-dimethylbutadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene, or chloroprene. One kind of such a conjugated diene may be used singly, or two or more kinds thereof may be used in combination. Among them, butadiene, isoprene, or farnesene is preferable.

Note that the above farnesene may be either α-farnesene or β-farnesene represented by the formula (1) below. From the viewpoint of ease of production of the block copolymer (P), β-farnesene is preferred. Note that α-farnesene and β-farnesene may be used in combination.

[Chemical Formula 1]

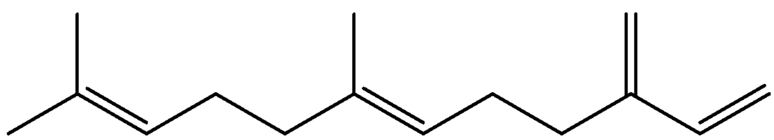

(1)

The polymer block (a2) may contain a structural unit derived from a monomer other than the conjugated diene, for example, another monomer such as a monomer constituting the polymer block (a1) described previously. However, the content of the structural unit derived from the conjugated diene in the polymer block (a2) is preferably 60 mass% or higher, more preferably 70 mass% or higher, still more preferably 80 mass% or higher, still more preferably 90 mass% or higher, and particularly preferably 100 mass%.

The hydrogenated block copolymer (A) is a hydrogenated product of a block copolymer (P) having two or more polymer blocks (a1) and one or more polymer blocks (a2).

How the polymer blocks (a1) and the polymer blocks (a2) are linked is not particularly limited, and the form may be linear, branched, radial, or a combination of two or more thereof. Among them, a form in which each block is linearly linked is preferable, and preferred is a linkage represented by $(a1\text{-}a2)_l$, $a1\text{-}(a2\text{-}a1)_m$, or $a1\text{-}(a1\text{-}a2)_n$ when the polymer block (a1) is denoted by a1 and the polymer block (a2) is denoted by a2. Note that l and n each independently represent an integer of 2 or more, and m represents an integer of 1 or more.

From the viewpoint of, for example, flexibility, molding processability, and handleability, the linkage is preferably provided such that the polymer block (a1), the polymer block (a2), and the polymer block (a1) constitute a block in this order (two polymer blocks (a1) are each bonded to each end of the polymer block (a2)). The hydrogenated block copolymer (A) is preferably a hydrogenated product of a triblock copolymer represented by a1-a2-a1.

Meanwhile, the two or more polymer blocks (a1) may be polymer blocks composed of the same structural unit or polymer blocks composed of different structural units. Similarly, in the case of having two or more polymer blocks (a2), the respective polymer blocks may be polymer blocks composed of the same structural unit or polymer blocks composed of different structural units. For example, in the two polymer blocks (a1) in the triblock copolymer represented by a1-a2-a1, the respective types of the aromatic vinyl compounds may be the same or different.

The content of the polymer block (a1) in the block copolymer (P) is from 3 to 45 mass%. Within this range, a thermoplastic elastomer composition excellent in flexibility and molding processability can be obtained. From this viewpoint, the content of the polymer block (a1) is preferably from 5 to 42 mass%, more preferably from 10 to 40 mass%, still more preferably from 12 to 37 mass%, and still more preferably from 15 to 35 mass%.

The content of the polymer block (a2) in the block copolymer (P) is usually from 55 to 97 mass%, preferably from 58 to 95 mass%, more preferably from 60 to 90 mass%, still more preferably from 63 to 88 mass%, and still more preferably from 65 to 85 mass%.

Here, in the case where the same type of polymer block is linearly linked via, for instance, a divalent coupling agent, the entire polymer block linked is treated as one polymer block. In accordance with this, a polymer block that should be originally strictly described as a1-X-a1 (where X represents a coupling agent residue) is denoted as a1 as a whole. This type of polymer block containing a coupling agent residue is herein handled as described above. Accordingly, for example, a block copolymer containing a coupling agent residue and to be strictly described as a1-a2-X-a2-a1 is denoted as a1-a2-a1, and is handled as an example of a triblock copolymer.

The total content of the polymer block (a1) and the polymer block (a2) in the block copolymer (P) is preferably 80 mass% or higher, more preferably 90 mass% or higher, still more preferably 95 mass% or higher, and still more preferably 100 mass%.

The hydrogenated block copolymer (A) is a hydrogenated product of the block copolymer (P). The hydrogenation rate of the carbon-carbon double bond in the polymer block (a2) is preferably from 50 to 100 mol%, more preferably from 70 to 100 mol%, still more preferably from 75 to 100 mol%, still more preferably from 80 to 100 mol%, particularly preferably from 85 to 100 mol%, and more particularly preferably from 90 to 100 mol% from the viewpoint of heat resistance and weather resistance.

Note that the hydrogenation rate can be calculated by measuring $^1$H-NMR of the block copolymer (P) and the hydrogenated block copolymer (A) after hydrogenation.

The peak top molecular weight (Mp) of the hydrogenated block copolymer (A) is preferably 20,000 or larger, more preferably 30,000 or larger, still more preferably 40,000 or larger, still more preferably 50,000 or larger, particularly preferably 60,000 or larger, more particularly preferably 70,000 or larger, still more particularly preferably 75,000 or larger, and is preferably 500,000 or less, more preferably 400,000 or less, and still more preferably 300,000 or less from the viewpoint of molding processability.

The molecular weight distribution (Mw/Mn) of the hydrogenated block copolymer (A) is preferably from 1 to 6, more preferably from 1 to 4, still more preferably from 1 to 3, and still more preferably from 1 to 2. When the molecular weight distribution is within the above range, the viscosity of the hydrogenated block copolymer (A) varies less, and is easy to handle.

The peak top molecular weight (Mp), the weight average molecular weight (Mw), and the number average molecular weight (Mn) of the hydrogenated block copolymer (A) are values determined in terms of standard polystyrene by gel permeation chromatography. The molecular weight distribution (Mw/Mn), which is the ratio of weight average molecular weight/number average molecular weight, is a value calculated from the values of Mw and Mn.

In addition to the polymer block (a1) and the polymer block (a2), the block copolymer (P) may contain a polymer block composed of another monomer as long as the effect of the present invention is not inhibited.

Examples of such another monomer include an unsaturated hydrocarbon compound (e.g., propylene, 1-butene, 1-pentene, 4-methyl -1 pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene); or a functional group-containing unsaturated compound (e.g., acrylic acid, methacrylic acid, methyl acrylate, methyl methacrylate, acrylonitrile,

methacrylonitrile, maleic acid, fumaric acid, crotonic acid, itaconic acid, 2-acryloyl ethanesulfonic acid, 2-methacryloyl ethanesulfonic acid, 2-acrylamide -2 methylpropane sulfonic acid, 2-methacrylamide-2 methylpropane sulfonic acid, vinyl sulfonic acid, vinyl acetate, methyl vinyl ether). One kind of them may be used singly or two or more kinds thereof may be used in combination.

When the block copolymer (P) has another polymer block, the content thereof is preferably 20 mass% or less, more preferably 10 mass% or less, and still more preferably 5 mass%.

[Method for Producing Hydrogenated Block Copolymer (A)]

The hydrogenated block copolymer (A) may be suitably produced, for example, by a polymerization step of obtaining the block copolymer (P) by anionic polymerization and a step of hydrogenating a carbon-carbon double bond in the polymer block (a2) in the block copolymer (P).

(Polymerization Step)

The block copolymer (P) may be produced by, for instance, a solution polymerization method or the method described in JP 2012-502135 A or JP 2012-502136 A. Among them, a solution polymerization method is preferable, and for example, a known method such as an ionic polymerization method (e.g., anionic polymerization or cationic polymerization) or a radical polymerization method is applicable. Among them, an anionic polymerization method is preferable. As the anionic polymerization method, preferred is a method of sequentially adding monomers such as an aromatic vinyl compound and a conjugated diene in a solvent typified by hydrocarbon in the presence of an ether compound or a Lewis base typified by a tertiary amine as necessary with an anionic polymerization initiator typified by an organic alkali metal to produce a block copolymer (P).

The polymerization reaction can be stopped by adding an alcohol (e.g., methanol, isopropanol) as the polymerization terminator. The resulting polymerization reaction solution is poured into a poor solvent (e.g., methanol) to precipitate the block copolymer (P), or the polymerization reaction solution is washed with water, separated, and then dried, so that the block copolymer (P) can be isolated.

The block copolymer (P) may be produced by a method in which the polymer block (a1) and the polymer block (a2), for instance, are polymerized in this order, and ends of the polymer block (a2) are coupled using a coupling agent typified by a halogenated silane compound.

The block copolymer (P) may be modified before the hydrogenation step described later. Examples of the functional group that can be introduced include an amino group, an alkoxysilyl group, a hydroxyl group, an epoxy group, a carboxyl group, a carbonyl group, a mercapto group, an isocyanate group, or an acid anhydride group.

Examples of the method for modifying the block copolymer include a method of adding a coupling agent typified by tin tetrachloride capable of reacting with a polymerization active terminal, a polymerization terminal modifying agent typified by 4,4'-bis(diethylamino)benzophenone, or other modifying agents described in JP 2011-132298 A before adding a polymerization terminator. In addition, the examples also include a method of grafting, for instance, maleic anhydride to the copolymer after isolation.

(Hydrogenation Step)

The hydrogenated block copolymer (A) may be obtained by subjecting the block copolymer (P) obtained by the above method or the modified block copolymer (P) to a step of hydrogenation. It is possible to use, as the hydrogenation method, a known method. For example, a hydrogenation catalyst typified by a Ziegler catalyst or palladium carbon may be added to a solution in which the block copolymer (P) is dissolved in a solvent that does not affect the hydrogenation reaction. The hydrogenated block copolymer (A) can then be obtained by hydrogenation reaction at an appropriate hydrogen pressure and reaction temperature.

<Acrylic Polymer (B)>

The acrylic polymer (B) is a polymer containing a structural unit derived from a (meth)acrylic acid ester, and is a polymer typically containing a structural unit derived from a (meth)acrylic acid ester in an amount of 50 mass% or larger, preferably 70 mass% or larger, and more preferably 90 mass% or larger. When the acrylic polymer (B) is contained, a thermoplastic elastomer composition can be obtained that has excellent transparency and excellent flexibility with high tensile strain at break and high hardness (for example, excellent gripping performance), and can have excellent strength of adhesion even to highly polar materials.

The acrylic polymer (B) only needs to contain a structural unit derived from a (meth)acrylic acid ester, and may be a homopolymer of a (meth)acrylic acid ester, a copolymer containing two or more structural units derived from a

(meth)acrylic acid ester, or a copolymer containing one or more structural units derived from a (meth)acrylic acid ester and a structural unit derived from a monomer other than a (meth)acrylic acid ester. When the acrylic polymer (B) is a copolymer, how the structural unit is contained is not particularly limited, and the acrylic polymer (B) may be a random copolymer or a block copolymer.

One kind of the acrylic polymer (B) may be used singly, or two or more kinds thereof may be used in combination.

From the viewpoint of obtaining a thermoplastic elastomer composition having higher hardness while having better flexibility, it is preferable that the acrylic polymer (B) contains an acrylic block copolymer (B1) having a polymer block (b1) composed of an acrylic acid ester unit and a polymer block (b2) composed of a methacrylic acid ester unit.

<Acrylic Block Copolymer (B1)>

The acrylic block copolymer (B1) has one or more polymer blocks (b1) containing a structural unit derived from an acrylic acid ester and one or more polymer blocks (b2) containing a structural unit derived from a methacrylic acid ester.

[Polymer Block (b1)]

The polymer block (b1) contains a structural unit derived from an acrylic acid ester. Such acrylic acid esters are roughly classified into an acrylic acid ester represented by the general formula $CH_2$=CH-COOR$^1$ (1) (where $R^1$ represents a $C_{1-3}$ organic group) (hereinafter, referred to as acrylic acid ester (b1-1)), an acrylic acid ester represented by the general formula $CH_2$=CH-COOR$^2$ (2) (where $R^2$ represents a $C_{4-12}$ organic group) (hereinafter, referred to as acrylic acid ester (b1-2)), and other acrylic acid esters.

Examples of the $C_{1-3}$ organic group represented by $R^1$ include: a $C_{1-3}$ alkyl group (e.g., a methyl group, an ethyl group, a n-propyl group, an isopropyl group); or an organic group in which the total number of carbon atoms is from 1 to 3 and an element (e.g., oxygen) other than carbon is included (e.g., a methoxyethyl group, a hydroxyethyl group, an aminoethyl group, a glycidyl group). Examples of the acrylic acid ester (b1-1) include a functional group-free acrylic acid ester (e.g., methyl acrylate, ethyl acrylate, isopropyl acrylate, n-propyl acrylate); or a functional group-containing acrylic acid ester (e.g., 2-methoxyethyl acrylate, 2-hydroxyethyl acrylate, 2-aminoethyl acrylate, glycidyl acrylate).

Among these acrylic acid esters (b1-1), a functional group-free acrylic acid ester is preferable, methyl acrylate or ethyl acrylate are more preferable, and methyl acrylate is still more preferable from the viewpoint that the resulting thermoplastic elastomer composition has higher hardness (e.g., better gripping performance), has better affinity for the hydrophilic group-containing block copolymer (E) described later, and has better adhesion to highly polar materials.

The acrylic acid ester (b1-1) may be used singly, or two or more kinds thereof may be used in combination.

Examples of the $C_{4-12}$ organic group represented by $R^2$ include: a $C_{4-12}$ alkyl group (e.g., a butyl group, an amyl group (pentyl group), a hexyl group, a cyclohexyl group, an ethylhexyl group, an octyl group, a decyl group, an isobornyl group, a lauryl group); a $C_{6-12}$ aromatic ring group (e.g., a phenyl group, a benzyl group); or an organic group in which the total number of carbon atoms is from 4 to 12 and an element (e.g., oxygen) other than carbon is included (e.g., an ethoxyethyl group, a tetrahydrofurfuryl group, a diethylaminoethyl group, a phenoxyethyl group). Examples of the acrylic acid ester (b1-2) include a functional group-free acrylic acid ester (e.g., n-butyl acrylate, isobutyl acrylate, sec-butyl acrylate, tert-butyl acrylate, amyl acrylate, isoamyl acrylate, n-hexyl acrylate, 2-ethylhexyl acrylate, n-octyl acrylate, isooctyl acrylate, decyl acrylate, isobornyl acrylate, lauryl acrylate, cyclohexyl acrylate, phenyl acrylate, benzyl acrylate); or a functional group-containing acrylic acid ester (e.g., 2-ethoxyethyl acrylate, 2-(diethylamino) ethyl acrylate, tetrahydrofurfuryl acrylate, 2-phenoxyethyl acrylate).

Among these acrylic acid esters (b1-2), a functional group-free acrylic acid ester is preferable, an alkyl acrylate having a $C_{4-12}$ alkyl group is more preferable, and n-butyl acrylate or 2-ethylhexyl acrylate is still more preferable from the viewpoint of clearer phase separation between the polymer block (b1) and the polymer block (b2). In addition, n-butyl acrylate is more preferable from the viewpoint of excellent durability, adhesion, and flexibility indicated by the tensile strain at break of the resulting thermoplastic elastomer composition.

The acrylic acid ester (b1-2) may be used singly, or two or more kinds thereof may be used in combination.

Examples of the acrylic acid ester other than the acrylic acid ester (b1-1) and the acrylic acid ester (b1-2) include a functional group-free acrylic acid ester such as octadecyl acrylate.

The above acrylic acid ester may be used singly, or two or more kinds thereof may be used in combination. In one preferable embodiment, the content of the structural unit derived from an acrylic acid ester in the polymer block (b1) is preferably 60 mass% or larger, more preferably 80 mass% or larger, still more preferably 90 mass% or larger, and still more preferably 100 mass%.

Among the acrylic acid esters, at least one compound selected from an acrylic acid ester (b1-1) or an acrylic acid ester (b1-2) is preferable from the viewpoint of exhibiting appropriate flexibility and tensile strain at break.

In one preferable embodiment, the acrylic acid ester to be a structural unit derived from an acrylic acid ester

contained in the polymer block (b1) contains two kinds selected from acrylic acid esters (b1-2), typically one kind (e.g., n-butyl acrylate) selected from acrylic acid esters (b1-2-1) having a $C_{4-6}$ organic group and one kind (e.g., 2-ethylhexyl acrylate) selected from acrylic acid esters (b1-2-2) having a $C_{7-12}$ organic group. In that case, the mass ratio (b1-2-1)/(b1-2-2) of the structural unit derived from an acrylic acid ester (b1-2-1) to the structural unit derived from an acrylic acid ester (b1-2-2) is preferably from 90/10 to 10/90 and more preferably from 60/40 to 40/60.

When (b1-2-1)/(b1-2-2) is within the above range, compatibility between the acrylic polymer (B) containing the acrylic block copolymer (B1) and the hydrogenated block copolymer (A) is enhanced. Thus, stable adhesion and moldability can be exhibited. Note that $^1$H-NMR may be measured to determine the mass ratio between the structural unit derived from the acrylic acid ester (b1-2-1) and the structural unit derived from the acrylic acid ester (b1-2-2).

Examples of the combination of the acrylic acid ester (b1-2-1) and the acrylic acid ester (b1-2-2) used in the polymer block (b1) include n-butyl acrylate/2-ethylhexyl acrylate. At this time, in terms of the acrylic acid ester (b1-2-1) and the acrylic acid ester (b1-2-2) to be used, the difference in solubility parameter between the acrylic acid ester (b1-2-1) and the acrylic acid ester (b1-2-2) is more preferably from 0.3 to 2.5 $(MPa)^{1/2}$. Note that such a solubility parameter can be calculated by the method described in "POLYMER HANDBOOK Forth Edition", VII pp. 675 to 714 (Wiley Interscience, Inc., published in 1999) and "Polymer Engineering and Science", 1974, Vol. 14, pp. 147 to 154.

To enable the resulting thermoplastic elastomer composition to have both excellent flexibility and high hardness (e.g., excellent gripping performance) and to have better strength of adhesion even to highly polar materials, it is preferable that in one embodiment, the structural unit derived from an acrylic acid ester contained in the polymer block (b1) contains a structural unit derived from an acrylic acid ester (b1-1) represented by the general formula $CH_2$=CH-COOR$^1$ (1) (where R$^1$ represents a $C_{1-3}$ organic group) and a structural unit derived from an acrylic acid ester (b1-2) represented by the general formula $CH_2$=CH-COOR$^2$ (2) (where R$^2$ represents a $C_{4-12}$ organic group). In that case, the mass ratio (b1-1)/(b1-2) of the structural unit derived from the acrylic acid ester (b1-1) to the structural unit derived from the acrylic acid ester (b1-2) in the polymer block (b1) is preferably from 90/10 to 5/95. The mass ratio within the above range results in high hardness (e.g., better gripping performance) due to the structural unit derived from the acrylic acid ester (b1-1), oleic acid resistance, adhesion to highly polar materials, and flexibility due to the structural unit derived from the acrylic acid ester (b1-2). The above structural unit mass ratio (b1-1)/(b1-2) is preferably from 85/15 to 10/90, more preferably from 80/20 to 10/90, and still more preferably from 75/25 to 15/85 from the viewpoint of achieving excellent balance between high hardness (e.g., better gripping performance), oleic acid resistance or adhesion to highly polar materials, and flexibility. Note that $^1$H-NMR may be measured to determine the mass ratio between the structural unit derived from the acrylic acid ester (b1-1) and the structural unit derived from the acrylic acid ester (b1-2).

In addition, the proportion of the structural unit derived from the acrylic acid ester (b1-1) in the structural unit derived from the acrylic acid ester of the polymer block (b1) is preferably 90% or less, more preferably 85% or less, and still more preferably 80% or less. In addition, the proportion of the structural unit derived from the acrylic acid ester (b1-1) in the polymer block (b1) is preferably 10% or higher, more preferably 150 or higher, and still more preferably 20% or higher.

In a preferred embodiment, the acrylic acid ester unit contained in the polymer block (b1) consists of the structural unit derived from the acrylic acid ester (b1-1) and the structural unit derived from the acrylic acid ester (b1-2).

When the polymer block (b1) is a copolymer containing two or more kinds of structural units derived from an acrylic acid ester, the polymer block (b1) may be formed of a random copolymer containing these acrylic acid esters, may be formed of a block copolymer, or may be formed of a gradient copolymer, but is usually desirably formed of a random copolymer. When the acrylic block copolymer (B1) contains two or more polymer blocks (b1), the polymer blocks (b1) may have the same or different structures. In one preferable embodiment, the total content of the structural units derived from the acrylic acid esters (b1-1) and (b1-2) in the polymer block (b1) is preferably 60 mass% or larger, more preferably 80 mass% or larger, still more preferably 90 mass% or larger, and still more preferably 100 mass% in the polymer block (b1) .

In addition, the acrylic block copolymer (B1) may contain two or more polymer blocks (b1). In this case, the polymer blocks (b1) may be the same or different.

The glass transition temperature of the polymer block (b1) is preferably from -100 to 30°C, more preferably from - 80 to 10°C, still more preferably from -70 to 0°C, and particularly preferably from -60 to -10°C. When the glass transition temperature is in this range, the thermoplastic elastomer composition of the present invention can have excellent flexibility at normal temperature.

[Polymer Block (b2)]

The polymer block (b2) contains a structural unit derived from a methacrylic acid ester. Examples of the methacrylic acid ester include a functional group-free methacrylic acid ester (e.g., methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate, benzyl methacrylate); or a functional group-containing methacrylic acid ester (e.g., methoxyethyl methacrylate, ethoxyethyl methacrylate, diethylaminoethyl methacrylate, 2-hydroxyethyl methacrylate, 2-aminoethyl methacrylate, glycidyl methacrylate, tetrahydrofurfuryl methacrylate).

Among these, from the viewpoint of improving the heat resistance and durability of the resulting thermoplastic elastomer composition, a functional group-free methacrylic acid ester is preferable; and methyl methacrylate, ethyl methacrylate, tert-butyl methacrylate, cyclohexyl methacrylate, 2-ethylhexyl methacrylate, isobornyl methacrylate, phenyl methacrylate, or benzyl methacrylate is more preferable. Methyl methacrylate is still more preferable from the viewpoint that the phase separation between the polymer block (b1) and the polymer block (b2) becomes clearer and the mechanical properties of the thermoplastic elastomer composition are improved. The polymer block (b2) may be composed of one kind or two or more kinds of these methacrylic acid esters. In addition, the acrylic block copolymer (B1) preferably has two or more polymer blocks (b2) from the viewpoint of enhancing adhesion durability. In that case, the polymer blocks (b2) may be the same or different.

The peak top molecular weight (Mp) of the polymer block (b2) is not particularly limited, but is preferably in the range of 1,000 to 50,000, and more preferably in the range of 2,000 to 30,000. When the Mp of the polymer block (b2) is smaller than this range, the strength of aggregation of the resulting acrylic block copolymer (B1) may be insufficient. In addition, when the Mp of the polymer block (b2) is larger than this range, the melt viscosity of the resulting acrylic block copolymer (B1) increases. Thus, the productivity in producing the thermoplastic elastomer composition may be poor. In one preferable embodiment, the content of the structural unit derived from a methacrylic acid ester in the polymer block (b2) is preferably 60 mass% or larger, more preferably 80 mass% or larger, still more preferably 90 mass% or larger, and still more preferably 100 mass%.

The glass transition temperature of the polymer block (b2) is preferably from 80 to 140°C, more preferably from 90 to 130°C, and still more preferably from 100 to 120°C. When the glass transition temperature is in this range, the polymer block (b2) acts as a physical pseudo-crosslinking point at a normal use temperature of the thermoplastic elastomer composition, and has excellent adhesion, durability, and heat resistance.

The polymer block (b1) may contain a structural unit derived from a methacrylic acid ester as long as the effect of the present invention is not impaired. The polymer block (b2) may contain a structural unit derived from an acrylic acid ester as long as the effect of the present invention is not impaired. In addition, if necessary, a structural unit derived from a monomer other than the (meth)acrylic acid ester may be included. Examples of the other monomer include a carboxyl group-containing vinyl-based monomer (e.g., (meth) acrylic acid, crotonic acid, maleic acid, fumaric acid); an aromatic vinyl-based monomer (e.g., styrene, α-methylstyrene, p-methylstyrene, m-methylstyrene); a conjugated diene-based monomer (e.g., butadiene, isoprene); an olefinic monomer (e.g., ethylene, propylene, isobutene, octene); a lactone-based monomer (e.g., ε-caprolactone, valerolactone); or (meth)acrylamide, (meth)acrylonitrile, maleic anhydride, vinyl acetate, vinyl chloride, or vinylidene chloride. When these monomers are used, they are used in an amount of preferably 40 mass% or less, more preferably 20 mass% or less, and still more preferably 10 mass% or less based on the total mass of the monomers used for each polymer block.

The acrylic block copolymer (B1) used in the present invention may optionally have an additional polymer block in addition to the polymer block (b1) and the polymer block (b2). Examples of the additional polymer block include a polymer block or a copolymer block containing a structural unit derived from a monomer (e.g., styrene, α-methylstyrene, p-methylstyrene, m-methylstyrene, acrylonitrile, methacrylonitrile, ethylene, propylene, isobutene, butadiene, isoprene, octene, vinyl acetate, maleic anhydride, vinyl chloride, vinylidene chloride); or a polymer block made of polyethylene terephthalate, polylactic acid, polyurethane, or polydimethylsiloxane. In addition, the above polymer block also includes a hydrogenated product of a polymer block containing a structural unit derived from a conjugated diene such as butadiene or isoprene.

When the polymer block (b1) is denoted as b1, the polymer block (b1) having a structure different from that of the polymer block (b1) is denoted as b1', and the polymer block (b2) are denoted as b2, the acrylic block copolymer (B1) is represented by the general formula:

$(b2\text{-}b1)_n$,

$(b2\text{-}b1)_n\text{-}b2$,

$b1\text{-}(b2\text{-}b1)_n$,

$(b2\text{-}b1)_n\text{-}b1'$,

$(b2\text{-}b1)_n\text{-}Z$,

or

$(b1-b2)_n-Z$

wherein n represents an integer of 1 to 30 and Z represents a coupling site (the coupling site after the coupling agent reacts with the polymer terminal to form a chemical bond and - represents a bond of each polymer block), provided that when a plurality of b1 and b2 are included in the formula, they may be polymer blocks having the same structure or polymer blocks having different structures. Here, the "different structure" means a structure in which at least one of a monomer unit constituting a polymer block, the molecular weight, the molecular weight distribution, the stereoregularity, and the ratio of each monomer unit in the case of having a plurality of monomer units, and the copolymer form (random, gradient, or block) is different. In addition, the value of n is preferably from 1 to 15, more preferably from 1 to 8, and still more preferably from 1 to 4. Among the above structures, a linear block copolymer represented by $(b2-b1)_n$, $(b2-b1)_n-b2$, $b1-(b2-b1)_n$, or $(b2-b1)_n-b1'$ is preferable from the viewpoint of excellent durability of the thermoplastic elastomer composition. More preferred is a diblock copolymer represented by b2-b1, a triblock copolymer represented by formula: b2-b1-b1', or a triblock copolymer represented by formula: b2-b1-b2 having blocks including, in sequence, the polymer block (b2), the polymer block (b1), and the polymer block (b2) (two polymer blocks (b2) are each bonded to each end of the polymer block (b1)). Still more preferred is a triblock copolymer represented by the formula: b2-b1-b2.

One kind of the acrylic block polymer (B1) may be used singly, or two or more kinds thereof may be used in combination.

From the viewpoint of the moldability of the thermoplastic elastomer composition of the present invention and of reducing the orientation of the resulting molding, two or more kinds of the acrylic block copolymer (B1) are used in combination in a preferred embodiment.

From the viewpoint of excellent transparency and moldability of the thermoplastic elastomer composition of the present invention, the peak top molecular weight (Mp) of the acrylic block copolymer (B1) is preferably 50,000 or more and 180,000 or less. In addition, from the viewpoint of better transparency and moldability, the Mp is more preferably 60,000 or larger and still more preferably 65,000 or larger, and is more preferably 175,000 or less, still more preferably 170,000 or less, and particularly preferably 165,000 or less.

The molecular weight distribution (Mw/Mn) of the acrylic block copolymer (B1) is preferably from 1.0 to 1.4. The Mw/Mn is more preferably from 1.0 to 1.35, still more preferably from 1.0 to 1.3, and particularly preferably from 1.0 to 1.25 from the viewpoint of excellent molding processability when the thermoplastic elastomer composition is formed.

Note that the peak top molecular weight (Mp), the number average molecular weight (Mn), and the weight average molecular weight (Mw) of the acrylic block copolymer (B1) are values determined in terms of standard polystyrene by gel permeation chromatography. The molecular weight distribution (Mw/Mn) is a value calculated from the values of Mw and Mn.

The content of the polymer block (b2) in the acrylic block copolymer (B1) is preferably from 5 to 55 mass%. The content of the polymer block (b2) is more preferably from 5 to 54 mass%, still more preferably from 5 to 52 mass%, and particularly preferably from 15 to 50 mass% from the viewpoint of both excellent transparency and high hardness (e.g., excellent gripping performance) at room temperature when the thermoplastic elastomer composition is formed.

In addition, the content of the polymer block (b1) in the acrylic block copolymer (B1) used in the present invention is preferably from 45 to 95 mass%, more preferably from 46 to 95 mass%, still more preferably from 48 to 95 mass%, and particularly preferably from 50 to 85 mass% from the same viewpoint as described above.

The melt flow rate of the acrylic block copolymer (B1) as measured at 190°C under a load of 21.6 N is preferably 1 g/10 min or larger, more preferably from 1 to 150 g/10 min, and still more preferably from 2 to 100 g/10 min. When the melt flow rate of the acrylic block copolymer (B1) is within the above range, the transparency is excellent.

The type A hardness of the acrylic block copolymer (B1) as defined in ISO7619-1 is preferably from 5 to 95, more preferably from 10 to 93, and still more preferably from 20 to 90. When the type A hardness of the acrylic block copolymer (B1) is within the above range, both transparency and high hardness (e.g., excellent gripping performance) are excellent.

[Method for Producing Acrylic Block Copolymer (B1)]

The method for producing the acrylic block copolymer (B1) is not particularly limited as long as a polymer satisfying the above-described conditions can be obtained, and a method according to a known technique can be adopted. In general, as a method for obtaining a block copolymer having a narrow molecular weight distribution, a method of subjecting a monomer to be a structural unit to living polymerization is employed. Examples of such a living polymerization method include: a living polymerization method using an organo-rare earth metal complex as a polymerization initiator (see JP H06-93060 A); a living anionic polymerization method using an organic alkali metal compound as a polymerization initiator in the presence of a mineral acid salt such as an alkali metal or alkaline earth metal salt (see JP H05-507737 A); a living anionic polymerization method using an organic alkali metal compound as a polymerization

initiator in the presence of an organoaluminum compound (see JP H11-335432 A); or atom transfer radical polymerization (ATRP) (see, Macromolecular Chemistry and Physics, 2000, Volume 201, p.1108-1114).

Among the above production methods, a living anionic polymerization method using an organic alkali metal compound as a polymerization initiator in the presence of an organoaluminum compound in a solvent typified by hydrocarbon is preferable because the transparency of the resulting block copolymer is high, the amount of the residual monomer is small and odor is suppressed, and during formation of the thermoplastic elastomer composition, foam generation can be suppressed. In addition, the molecular structure of the methacrylic acid ester polymer block is highly syndiotactic, which is also preferable from the viewpoint of exerting an effect of enhancing the heat resistance of the thermoplastic elastomer composition. Examples of the organoaluminum compound that can be used include the organoaluminum compound described in JP 2019-157067 A, such as isobutylbis(2,6-di-t-butyl-4-methylphenoxy)aluminum. In addition, the polymerization conditions used may be polymerization conditions described in JP 2019-157067 A.

The acrylic block copolymer (B1) can be produced, for example, by repeating a step of forming a desired polymer block (e.g., a polymer block (b2), a polymer block (b1)) at a desired living polymer terminal obtained by polymerizing monomers a desired number of times, and then stopping the polymerization reaction. The method as described above may be used to produce, for example, a binary block (diblock) copolymer composed of the polymer block (b2) and the polymer block (b1),a ternary block (triblock) copolymer composed of the polymer block (b2)-polymer block (b1)-polymer block (b2) or the polymer block (b2)-polymer block (b1)-polymer block (b1'), or a quaternary block copolymer composed of the polymer block (b2)-polymer block (b1)-polymer block (b2)-polymer block (b1).

The acrylic block copolymer (B1) may be included as the acrylic polymer (B). In this case, the content of the acrylic block copolymer (B1) is preferably from 35 to 100 mass%, more preferably from 40 to 100 mass%, and still more preferably from 45 to 100 mass% in the acrylic polymer (B) from the viewpoint of obtaining a thermoplastic elastomer composition with better flexibility. In addition, from the above viewpoint, in a preferred embodiment, the acrylic polymer (B) consists of the acrylic block copolymer (B1) (the entire acrylic polymer (B) is the acrylic block copolymer (B1)) .

In addition, the acrylic block copolymer (B1) may be included as the acrylic polymer (B). In this case, in a preferred embodiment, a methacrylic acid ester-based polymer (B2) other than the acrylic block copolymer (B1) is further included.

The methacrylic acid ester-based polymer (B2) is a polymer mainly containing a methacrylic acid ester unit (provided that the acrylic block copolymer (B1) is excluded). Typically, the polymer mainly contains a methacrylic ester unit without any reactive group, and is what is called an acrylic resin. From the viewpoint of improving, for instance, the transparency and molding processability of the thermoplastic elastomer composition of the present invention, the polymer is preferably a homopolymer of a methacrylic acid ester (typically a methacrylic acid ester without any reactive group) or a copolymer mainly composed of a methacrylic acid ester (typically a methacrylic acid ester without any reactive group) unit. Examples of the methacrylic acid ester as a main component constituting the methacrylic acid ester-based polymer (B2) include a methacrylic acid ester without any reactive group (e.g., methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate). Among them, from the viewpoint of compatibility with the acrylic block copolymer (B1) and the viewpoint of transparency of the resulting thermoplastic elastomer composition, preferred is an alkyl methacrylate (e.g., methyl methacrylate, ethyl methacrylate, isopropyl methacrylate, n-butyl methacrylate, tert-butyl methacrylate, cyclohexyl methacrylate, isobornyl methacrylate), and more preferred is methyl methacrylate. One kind or two or more kinds of these methacrylic acid esters may be used.

As long as the purpose and effect of the present invention are not impaired, a methacrylic acid ester unit having a reactive group may be included as a methacrylic acid ester unit constituting the methacrylic acid ester-based polymer (B2). Examples of the methacrylate having a reactive group include glycidyl methacrylate or allyl methacrylate. The content of the methacrylic acid ester unit having a reactive group in the methacrylic acid ester unit contained in the methacrylic acid ester-based polymer (B2) is small, and is preferably 20 mass% or less and more preferably 10 mass% or less.

The content of the methacrylic acid ester unit contained in the methacrylic acid ester-based polymer (B2) is preferably 80 mass% or larger, more preferably 90 mass% or larger, and may be 100 mass%.

The methacrylic acid ester-based polymer (B2) may be a copolymer mainly composed of a methacrylic acid ester unit. In this case, examples of the other monomer that can be copolymerized with the methacrylic acid ester constituting the copolymer include, but are not particularly limited to, an acrylic acid ester (e.g., methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate, allyl acrylate); an unsaturated carboxylic acid (e.g., methacrylic acid, acrylic acid, maleic anhydride); an olefin (e.g., ethylene, propylene, 1-butene, isobutylene, 1-octene); a conjugated diene compound (e.g.,

1,3-butadiene, isoprene, myrcene); an aromatic vinyl compound (e.g., styrene, α-methylstyrene, p-methylstyrene, m-methylstyrene); or vinyl acetate, vinyl pyridine, acrylonitrile, methacrylonitrile, vinyl ketone, vinyl chloride, vinylidene chloride, vinylidene fluoride, acrylamide, or methacrylamide. One kind or two or more kinds of these monomers may be used.

In a preferred embodiment, the methacrylic acid ester-based polymer (B2) is a polymer composed of a methyl methacrylate unit and an acrylic acid ester unit, or a polymer consisting of a methyl methacrylate unit. Regarding such a polymer, the resulting molding should have smaller thickness unevenness and better bending whitening resistance, and should have better surface smoothness even when molded at a high speed (e.g., melt extrusion molding) during production of the molding from the thermoplastic elastomer composition of the present invention. Therefore, a polymer containing 80 to 100 mass% of a methyl methacrylate unit and 20 to 0 mass% of an acrylic acid ester unit is preferable, a polymer containing 90 to 100 mass% of a methyl methacrylate unit and 10 to 0 mass% of an acrylic acid ester unit is more preferable, and a polymer containing 95 to 100 mass% of a methyl methacrylate unit and 5 to 0 mass% of an acrylic acid ester unit is still more preferable.

The melt flow rate of the methacrylic acid ester-based polymer (B2) as measured at 230°C and 37.3 N is preferably from 1 to 25 g/10 min, more preferably from 2 to 20 g/10 min, and still more preferably from 3 to 17 g/10 min. The methacrylic acid ester-based polymer (B2) having such a melt flow rate may be included to produce a molding having excellent transparency.

When the methacrylic acid ester-based polymer (B2) is a copolymer, the form of copolymerization is not particularly limited, and random copolymerization or alternating copolymerization, for example, is generally used.

The stereoregularity of the methacrylic acid ester-based polymer (B2) is not particularly limited, and an isotactic, heterotactic, or syndiotactic polymer may be used.

The peak top molecular weight (Mp) of the methacrylic acid ester-based polymer (B2) is not particularly limited, but is usually preferably from 30,000 to 500,000 and more preferably from 50,000 to 200,000. In addition, one kind of the methacrylic acid ester-based polymer (B2) used in the present invention may be used singly. It is also possible to use a mixture of two or more different methacrylic acid ester-based polymers (B2) having, for instance, different Mp.

The molecular weight distribution (Mw/Mn) of the methacrylic acid ester-based polymer (B2) is not particularly limited, but is usually preferably from 1.0 to 5.0. From the viewpoint of excellent transparency and molding processability, the Mw/Mn is more preferably from 1.1 to 4.0, still more preferably from 1.2 to 3.0, and particularly preferably from 1.5 to 2.5.

The peak top molecular weight (Mp), the number average molecular weight (Mn), and the weight average molecular weight (Mw) of the methacrylic acid ester-based polymer (B2) are values determined in terms of standard polystyrene by gel permeation chromatography, and the molecular weight distribution (Mw/Mn) is a value calculated from the values of Mw and Mn.

The methacrylic acid ester-based polymer (B2) used may be a commercially available product satisfying the above melt flow rate range. Examples of the commercially available methacrylic acid ester-based polymer (B2) (acrylic resin) include "PARAPET G" (MFR: 8.0 g/10 min (at 230°C and 37.3 N)) and "PARAPET GF" (MFR: 15.0 g/10 min (at 230°C and 37.3 N)) [all are trade names; manufactured by KURARAY CO., LTD.].

The mass ratio [(B1)/(B2)] of the acrylic block copolymer (B1) to the methacrylic acid ester-based polymer (B2) is preferably from 50/50 to 100/0. When the mass ratio (B1)/(B2) falls within this range, the transparency of a molding prepared from the thermoplastic elastomer composition of the present invention is excellent. Further, from the viewpoint of balance among transparency, tensile strength, and heat resistance, the mass ratio [(B1)/(B2)] is more preferably from 60/40 to 98/2 and still more preferably from 65/35 to 95/5.

In the thermoplastic elastomer composition of the present invention, the content of the acrylic polymer (B) is from 185 to 1500 parts by mass based on 100 parts by mass of the hydrogenated block copolymer (A). When the content of the acrylic polymer (B) is less than 185 parts by mass, it is difficult to achieve both the adhesion and high hardness (e.g., excellent gripping performance) of the thermoplastic elastomer composition of the present invention. In addition, the strength of adhesion to highly polar materials tends to be insufficient. On the other hand, when the content of the acrylic polymer (B) is more than 1500 parts by mass, the high hardness (e.g., gripping performance) of the thermoplastic elastomer composition of the present invention tends to be insufficient. From the viewpoint of achieving both flexibility and high hardness (e.g., better gripping performance) and excellent transparency of the thermoplastic elastomer composition, the content of the acrylic polymer (B) in the thermoplastic elastomer composition is preferably from 200 to 1300 parts by mass and more preferably from 300 to 1200 parts by mass based on 100 parts by mass of the hydrogenated block copolymer (A).

In the thermoplastic elastomer composition of the present invention, the total content of the hydrogenated block copolymer (A) and the acrylic polymer (B) is preferably 30 mass% or larger, more preferably 40 mass% or larger, and still more preferably 45 mass% or larger based on the total amount of the thermoplastic elastomer composition. From the viewpoint of obtaining stable and favorable adhesion, the content is preferably 99 mass% or less, more preferably 90 mass% or less, and still more preferably 80 mass% or less.

<Aromatic polymer (C)>

The aromatic polymer (C) is a polymer containing a structural unit derived from at least one aromatic vinyl compound excluding the hydrogenated block copolymer (A) and the acrylic polymer (B).

Examples of such an aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl) styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, or divinylbenzene. One kind of these aromatic vinyl compounds may be used singly, or two or more kinds thereof may be used in combination. Among them, preferred is styrene, α-methylstyrene, or 4-methylstyrene, and more preferred is α-methylstyrene.

In addition, the aromatic polymer (C) may contain a structural unit derived from a monomer other than the aromatic vinyl compound. Examples of the other monomer include (meth)acrylic acid, a (meth)acrylic acid derivative, (meth)acrylamide, a (meth)acrylamide derivative, (meth)acrylonitrile, isoprene, 1,3-butadiene, ethylene, vinyl acetate, vinyl chloride, vinylidene chloride, N-vinylindole, N-vinylphthalimide, N-vinylpyrrolidone, N-vinylcarbazole, or N-vinylcaprolactam.

However, the content of the structural unit derived from the aromatic vinyl compound in the aromatic polymer (C) is preferably 60 mass% or higher, more preferably 70 mass% or higher, still more preferably 90 mass% or higher, still more preferably 80 mass% or higher, and particularly preferably 95 mass%.

The peak top molecular weight (Mp) of the aromatic polymer (C) is preferably 300 or larger, more preferably 500 or larger, and still more preferably 1,000 or larger and is preferably 12,000 or less, more preferably 8,000 or less, and still more preferably 6,000 or less. When the Mp is within the above range, the transparency of the resulting thermoplastic elastomer composition tends to be better. Note that the peak top molecular weight (Mp) of the aromatic polymer (C) is a value determined in terms of standard polystyrene by gel permeation chromatography.

The softening point of the aromatic polymer (C) is not particularly limited, and is, for example, preferably 5°C or higher, more preferably 30°C or higher, and still more preferably 60°C or higher. When the softening point of the aromatic polymer (C) is within the above range, a thermoplastic elastomer composition having better transparency is obtained.

Examples of the aromatic polymer (C) include polystyrene, poly(α-methylstyrene), poly(4-methylstyrene), a styrene/α-methylstyrene copolymer, a styrene/4-methylstyrene copolymer, an α-methylstyrene/4-methylstyrene copolymer, or a styrene/α-methylstyrene/4-methylstyrene copolymer. Note that one kind of the aromatic polymer (C) may be used singly, or two or more kinds thereof may be used in combination.

The aromatic polymer (C) used may be a commercially available product. Examples of the commercially available product of the aromatic polymer (C) include: an aromatic polymer, manufactured by Eastman Chemical Company, such as Piccolastic A5 (polystyrene, softening point: 5°C, Mp: 350), Piccolastic A-75 (polystyrene, softening point: 74°C, Mp: 1,300), Piccotex 75 (α-methylstyrene/4-methylstyrene copolymer, softening point: 75°C, Mp: 1,100), Piccotex LC (α-methylstyrene/4-methylstyrene copolymer, softening point: 91°C, Mp: 1,350), Crystalex 3070 (styrene/α-methylstyrene copolymer, softening point: 70°C, Mp: 950), Crystalex 3085 (styrene/α-methylstyrene copolymer, softening point: 85°C, Mp: 1,150), Crystalex 3100 (styrene/α-methylstyrene copolymer, softening point: 100°C, Mp: 1,500), Crystalex 5140 (styrene/α-methylstyrene copolymer, softening point: 139°C, Mp: 4,900), Endex 155 (poly α-methylstyrene, softening point: 153°C, Mp: 6,900), or Endex 160 (poly α-methylstyrene, softening point: 158°C, Mp: 9,200); or

Hymer ST-95 (polystyrene, softening point: 95°C, Mp: 4,000; manufactured by Sanyo Chemical Industries, Ltd.), YS Resin SX-100 (polystyrene, softening point: 100°C, Mp: 2,500; manufactured by YASUHARA CHEMICAL CO., LTD.), FMR-0150 (styrene/aromatic hydrocarbon copolymer, softening point: 145°C, Mp: 2,040; manufactured by Mitsui Chemicals, Inc.), FTR-6100 (styrene/aliphatic hydrocarbon-based copolymer, softening point: 95°C, Mp: 1,210; manufactured by Mitsui Chemicals, Inc.), FTR-6110 (styrene/aliphatic hydrocarbon-based copolymer, softening point: 110°C, Mp: 1,570; manufactured by Mitsui Chemicals, Inc.), FTR-6125 (styrene/aliphatic hydrocarbon-based copolymer, softening point: 125°C, Mp: 1,950; manufactured by Mitsui Chemicals, Inc.), FTR-7100 (styrene/α-methylstyrene/aliphatic hydrocarbon-based copolymer, softening point: 100°C, Mp: 1,440; manufactured by Mitsui Chemicals, Inc.), FTR-0100 (poly α-methylstyrene, softening point: 100°C, Mp: 1,960; manufactured by Mitsui Chemicals, Inc.), FTR-2120 (styrene/α-methylstyrene copolymer, softening point: 120°C, Mp: 2,630; manufactured by Mitsui Chemicals, Inc.), or FTR-2140 (styrene/α-methylstyrene copolymer, softening point: 137°C, Mp: 3,230; manufactured by Mitsui Chemicals, Inc.).

In the thermoplastic elastomer composition of the present invention, the content of the aromatic polymer (C) is from 5 to 150 parts by mass based on 100 parts by mass of the hydrogenated block copolymer (A). When the content of the aromatic polymer (C) is within the above range, a thermoplastic elastomer composition with excellent transparency is obtained. From the viewpoint of better transparency, the content of the aromatic polymer (C) is preferably from 10 to 120 parts by mass, more preferably from 15 to 100 parts by mass, and still more preferably from 18 to 80 parts by mass based on 100 parts by mass of the hydrogenated block copolymer (A).

In the thermoplastic elastomer composition of the present invention, the mass ratio [(C)/(B)] of the aromatic polymer (C) to the acrylic polymer (B) is from 0.01 to 0.19. When the mass ratio [(C)/(B)] is less than 0.01, the effect of improving the compatibility between the hydrogenated block copolymer (A) and the acrylic polymer (B) is poor, and the resulting thermoplastic elastomer composition does not have excellent transparency. In addition, when the mass ratio [(C)/(B)] exceeds 0.19, the aromatic polymer (C) tends to form a unique phase structure in the thermoplastic elastomer composition, and the resulting thermoplastic elastomer composition does not have excellent transparency. From the viewpoint of obtaining a thermoplastic elastomer composition having better transparency, the mass ratio [(C)/(B)] is preferably from 0.03 to 0.17, more preferably from 0.04 to 0.16, and still more preferably from 0.05 to 0.15.

<Softening Agent (D)>

The thermoplastic elastomer composition of the present invention further contains a softening agent (D). The softening agent may be included to produce a thermoplastic elastomer composition having better transparency and flexibility. Examples of the softening agent (D) include: process oil (e.g., paraffinic oil, naphthenic oil, aromatic oil); a phthalic acid derivative (e.g., dioctyl phthalate, dibutyl phthalate); white oil; mineral oil; a liquid cooligomer of ethylene and $\alpha$-olefin; liquid paraffin; polybutene; low-molecular-weight polyisobutylene; or liquid polydiene (e.g., liquid polybutadiene, liquid polyisoprene, a liquid polyisoprene-butadiene copolymer, a liquid styrenebutadiene copolymer, a liquid styrene-isoprene copolymer) or a hydrogenated product thereof. Among them, from the viewpoint of obtaining a thermoplastic elastomer composition having high hardness (e.g., excellent gripping performance) and excellent transparency, paraffinic oil, naphthenic oil, or aromatic oil is preferable, and paraffinic oil or naphthenic oil is more preferable.

One kind of the softening agent (D) may be used singly or two or more kinds thereof may be used in combination.

It is possible to use, as the softening agent (D), one using a plant-derived raw material at a high ratio. When such a softening agent containing a plant-derived raw material is used, the content (bio-content) of the plant-derived component in the softening agent (D) is preferably 70 mass% or larger, more preferably 80 mass% or larger, and still more preferably 90 mass% or larger.

In the thermoplastic elastomer composition of the present invention, the content of the softening agent (D) is from 70 to 300 parts by mass based on 100 parts by mass of the hydrogenated block copolymer (A). When the content of the softening agent (D) is within the above range, a thermoplastic elastomer composition with excellent transparency, adhesion, and flexibility is obtained. From the viewpoint of excellent transparency, adhesion, and flexibility, the content of the softening agent (D) is preferably from 80 to 250 parts by mass, more preferably from 90 to 200 parts by mass, and still more preferably from 95 to 170 parts by mass based on 100 parts by mass of the hydrogenated block copolymer (A).

(Other Optional Components)

As long as the effect of the present invention is not impaired, the thermoplastic elastomer composition of the present invention may optionally contain, for example, a hydrophilic group-containing block copolymer (E) (excluding the hydrogenated block copolymer (A), the acrylic polymer (B), and the aromatic polymer (C)), an inorganic filler, an antioxidant, an additional thermoplastic polymer, a tackifier resin, a lubricant, a light stabilizer, a processing aid, a colorant (e.g., a pigment, a dye), a flame retardant, an antistatic agent, a matting agent, a silicon oil, an antiblocking agent, a UV absorber, a release agent, a foaming agent, an antibacterial agent, an antifungal agent, and/or a fragrance. One kind of these other optional components may be used singly, or two or more kinds thereof may be used in combination.

<Hydrophilic Group-Containing Block Copolymer (E)>

The hydrophilic group-containing block copolymer (E) is a block copolymer having a structure in which a polyolefin block and a hydrophilic polymer block are alternately linked, and the hydrophilic group-containing block copolymer (E) is a polymer different from any of the hydrogenated block copolymer (A), the acrylic polymer (B), or the aromatic polymer (C).

In one preferred embodiment, the thermoplastic elastomer composition of the present invention contains the hydrophilic group-containing block copolymer (E). This makes it possible to improve the dispersion of both the hydrogenated block copolymer (A) and the acrylic polymer (B), to further improve the tensile strength of the thermoplastic elastomer composition of the present invention, and to further improve the strength of adhesion to highly polar materials.

Examples of the hydrophilic group-containing block copolymer (E) include the polymer described in JP 2001-278985 A. Examples thereof include those having a structure in which a polyolefin block and a hydrophilic polymer block are repeatedly and alternately linked via, for example, an ester bond, an amide bond, an ether bond, a urethane bond, or an imide bond. The polymer constituting the polyolefin block of the hydrophilic group-containing block copolymer (E) is preferably a polyolefin having a carbonyl group, preferably a carboxyl group, at both terminals of the polymer, a

polyolefin having a hydroxyl group at both terminals of the polymer, or a polyolefin having an amino group at both terminals of the polymer. Further, it is also possible to use a polyolefin having a carbonyl group, preferably a carboxyl group, at one end of the polymer, a polyolefin having a hydroxyl group at one end of the polymer, or a polyolefin having an amino group at one end of the polymer. Among them, a polyolefin having a carbonyl group is preferable from the viewpoint of ease of modification.

In addition, as the polymer constituting the hydrophilic polymer block of the hydrophilic group-containing block copolymer (E), a polyether, a polyether-containing hydrophilic polymer, a cationic polymer, or an anionic polymer can be used. More specific examples thereof include: polyether diol, polyether diamine, or a modified product thereof; a polyether ester amide having a segment of polyether diol as a polyether segment forming component, a polyetheramide-imide having the same segment, a polyether ester having the same segment, a polyether amide having the same segment, or a polyether urethane having the same segment; a cationic polymer having, in the molecule, 2 to 80 and preferably 3 to 60 cationic groups separated by nonionic molecular chains; or an anionic polymer containing a dicarboxylic acid having a sulfonyl group and a diol or a polyether as essential structural units and having 2 to 80 and preferably 3 to 60 sulfonyl groups in the molecule.

Preferred examples of the hydrophilic group-containing block copolymer (E) include a hydrophilic group-containing block copolymer obtained by esterifying modified polypropylene obtained by reacting polypropylene with maleic anhydride and a polyalkylene glycol (e.g., polyethylene glycol, polypropylene glycol) in the presence of a catalyst. Examples of such a block copolymer include "Perestat 300" (trade name) marketed by Sanyo Chemical Industries, Ltd. One kind of the hydrophilic group-containing block copolymer (E) may be used singly, or two or more kinds thereof may be used in combination.

In the thermoplastic elastomer composition of the present invention, the content of the hydrophilic group-containing block copolymer (E) is preferably from 0.1 to 60 parts by mass based on 100 parts by mass of the hydrogenated block copolymer (A). When the content of the hydrophilic group-containing block copolymer (E) is 0.1 parts by mass or more, favorable adhesion can be stably obtained, and a thermoplastic elastomer composition having a potent strength of adhesion can be obtained. On the other hand, when the content of the hydrophilic group-containing block copolymer (E) is 60 parts by mass or less, sufficient adhesion is obtained, the thermoplastic elastomer composition does not become hard, and favorable flexibility and molding processability can be obtained. From this viewpoint, the content of the hydrophilic group-containing block copolymer (E) is more preferably from 5 to 55 parts by mass, still more preferably from 10 to 55 parts by mass, and still more preferably from 15 to 50 parts by mass based on 100 parts by mass of the hydrogenated block copolymer (A).

<Inorganic Filler>

The inorganic filler can be included for the purpose of, for example, improving physical properties (e.g., weather resistance) of the thermoplastic elastomer composition of the present invention, adjusting the hardness, and improving cost performance as an extender. Examples of the inorganic filler include calcium carbonate, talc, magnesium hydroxide, aluminum hydroxide, mica, clay, natural silicic acid, synthetic silicic acid, titanium oxide, carbon black, barium sulfate, glass balloon, or glass fiber. One kind of the inorganic filler may be used singly or two or more kinds thereof may be used in combination.

When an inorganic filler is contained, the content thereof is preferably within a range in which the flexibility and transparency of the thermoplastic elastomer composition are not impaired, and is preferably 200 parts by mass or less, more preferably 150 parts by mass or less, still more preferably 100 parts by mass or less, and particularly preferably 50 parts by mass or less based on 100 parts by mass of the hydrogenated block copolymer (A).

<Antioxidant>

Examples of the antioxidant include a hindered phenol-based, phosphorus-based, lactone-based, or hydroxyl-based antioxidant. Among them, a hindered phenol antioxidant is preferable. One kind of the antioxidant may be used singly or two or more kinds thereof may be used in combination. When an antioxidant is contained, the content thereof is preferably in a range in which the thermoplastic elastomer composition is not colored when melt-kneaded, and is preferably from 0.1 to 5 parts by mass based on 100 parts by mass of the hydrogenated block copolymer (A).

Examples of the additional thermoplastic polymer include a polar group-free olefin-based polymer, a styrene-based polymer (provided that the aromatic polymer (C) is excluded), a polyphenylene ether resin, or polyethylene glycol. Among them, when the thermoplastic elastomer composition of the present invention contains a polar group-free olefin-based polymer, the molding processability is further improved. Examples of the polar group-free olefin-based polymer include polyethylene, polypropylene, polybutene, an ethylene/$\alpha$-olefin copolymer obtained by copolymerizing ethylene and an $\alpha$-olefin (e.g., propylene, 1-butene, 1-hexene, 1-octene), a propylene/ethylene copolymer, or a propylene/$\alpha$-olefin copolymer obtained by copolymerizing propylene and an $\alpha$-olefin having 4 or more carbon atoms. Note that in the case

of a copolymer of two or more monomers (e.g., an ethylene/α-olefin copolymer, a propylene/ethylene copolymer, a propylene/α-olefin copolymer), the linkage form of these copolymers is not particularly limited, and may be, for example, a random copolymer or a block copolymer. One kind of these thermoplastic resins may be used singly, or two or more kinds may be used in combination.

When an additional thermoplastic polymer is contained, the content thereof is preferably 100 parts by mass or less, more preferably 50 parts by mass or less, more preferably 20 parts by mass or less, and still more preferably 10 parts by mass or less based on 100 parts by mass of the hydrogenated block copolymer (A).

Examples of the tackifier resin include a rosin-based resin, a terpene phenol resin, a terpene resin, an aromatic hydrocarbon-modified terpene resin, an aliphatic petroleum resin, an alicyclic petroleum resin, an aromatic petroleum resin, a coumarone-indene resin, a phenolic resin, or a xylene resin. Note that the aromatic compound (C) is excluded from the tackifier resin.

The softening point of the tackifier resin is preferably from 85 to 160°C, more preferably from 100 to 150°C, and still more preferably from 105 to 145°C from the viewpoint of molding processability.

One kind of these tackifier resins may be used singly, or two or more kinds thereof may be used in combination.

When a tackifier resin is contained, the content thereof is preferably within a range in which the dynamic characteristics of the thermoplastic elastomer composition are not impaired, and is preferably 100 parts by mass or less, more preferably 70 parts by mass or less, still more preferably 30 parts by mass or less, and particularly preferably 10 parts by mass or less based on 100 parts by mass of the hydrogenated block copolymer (A).

The method for producing the thermoplastic elastomer composition according to the present invention is not particularly limited, and the production method is not particularly limited as long as the method enables uniform mixing of the hydrogenated block copolymer (A), the acrylic polymer (B), the aromatic polymer (C), the softening agent (D), and optionally added other components such as the hydrophilic group-containing block copolymer (E) and the additional thermoplastic polymer. Examples of the production method include a method in which the components are dissolved in a solvent and the resulting solution is then cast and dried; or a melt-kneading method. It is preferable to use a melt-kneading method from the viewpoint of enhancing the dispersibility of each constituent component. The melt-kneading can be performed using, for example, a melt-kneading apparatus such as a single-screw extruder, a twin-screw extruder, a kneader, a batch mixer, a roller, or a Banbury mixer. The thermoplastic elastomer composition of the present invention can be obtained by melt-kneading the components preferably under the conditions at 170 to 270°C and a screw rotation speed of 50 to 500 rpm.

The hardness (hereinafter, also referred to as "A hardness") of the thermoplastic elastomer composition of the present invention is measured by a type A durometer method of JIS K6253-2:2012, and is preferably 60 or more and 90 or less, more preferably 63 or more and 85 or less, and still more preferably 65 or more and 80 or less. When the A hardness is too high, it is difficult to obtain favorable flexibility and elasticity. On the other hand, when the A hardness is too low, the molding obtained from the thermoplastic elastomer composition is easily deformed. For example, when the molding obtained from the thermoplastic elastomer composition of the present invention is held, for instance, by hand, the gripping force tends to be insufficient.

The thermoplastic elastomer composition of the present invention has a rate of weight change of preferably 0% or more and 50% or less, more preferably 0% or more and 45% or less, and still more preferably 0% or more and 40% or less when immersed in oleic acid under the conditions at 23°C for 168 hours. If the weight change when immersed in oleic acid is too large, resistance due to, for example, oleic acid contained in sebum tends to be low when the product is used as a grip. For example, when a molding obtained from the thermoplastic elastomer composition of the present invention is used for a long period of time, problems such as discoloration, deformation, or detachment of the grip tend to occur.

The thermoplastic elastomer composition of the present invention can be processed into a molding by a molding method such as extrusion molding, injection molding, hollow molding, compression molding, calendar molding, or vacuum molding.

The thermoplastic elastomer composition of the present invention is molded into, for example, a sheet or a film, or is molded into a multi-layer including another sheet or film, and is used for daily goods packaging, industrial materials packaging, food packaging sheets, and film applications. The applications also include, for example, hose, tube, or belt applications; footwear applications (e.g., sports shoes, fashion sandals); home appliance applications (e.g., televisions, audios, vacuum cleaners, door seals for refrigerators, remote control switches, mobile phones); OA office equipment applications; automotive applications such as automotive interior and exterior parts applications (e.g., bumper parts, racks and pinion boots, suspension boots, constant velocity joint boots, body panels); civil engineering and construction applications (e.g., civil engineering sheets, waterproof sheets, window frame sealants, building sealants, various hoses, knobs); medical applications (e.g., medical syringe gaskets, catheter tube, infusion bags); various grips in, for example, scissors, drivers, toothbrushes, or ski stocks; stationery such as pen grips; sporting goods (e.g., underwater glasses, snorkels); various packing applications for, for example, sealing, waterproof, soundproofing, or vibration-proof purposes; or leisure products, toys, or industrial products. In this way, the composition can be widely applied as various moldings.

However, the shape, structure, and application of each molding, for example, are not particularly limited. The thermoplastic elastomer composition of the present invention has excellent transparency, excellent flexibility indicated by high tensile strain at break, and high hardness (e.g., excellent gripping performance), and can have excellent strength of adhesion even to highly polar materials. Thus, a laminated structure used can include a layer formed of the thermoplastic elastomer composition of the present invention and a layer formed of a material other than the thermoplastic elastomer composition.

[Laminated Structure]

A laminated structure according to the present invention includes a layer formed of the thermoplastic elastomer composition of the present invention and a layer formed of a material other than the thermoplastic elastomer composition. The laminated structure of the present invention may be a laminated structure in which two or more kinds of a layer formed of the thermoplastic elastomer composition and a layer formed of a material other than the thermoplastic elastomer composition are combined and bonded.

The shape of the laminated structure is not particularly limited, and examples thereof include a film-like shape, a sheet-like shape, or a tubular shape. Among them, a film-like laminated structure is preferable.

Examples of the material that is other than the thermoplastic elastomer composition and is to be an adherend include a synthetic resin, a ceramic, a metal, or a fabric.

Examples of the synthetic resin used for the laminated structure of the present invention include polyurethane resins, polyamide resins, polyester resins, polycarbonate resins, polyphenylene sulfide resins, polyacrylate resins, polymethacrylate resins, polyether resins, (meth)acrylonitrile-butadiene-styrene resins, (meth)acrylonitrile-styrene resins, (meth)acrylic acid ester-butadiene-styrene resins, (meth)acrylic acid ester-styrene resins, methyl (meth)acrylate-butadiene-styrene resins, epoxy resins, phenol resins, diallyl phthalate resins, polyimide resins, melamine resins, polyacetal resins, polysulfone resins, polyethersulfone resins, polyetherimide resins, polyphenylene ether resins, polyarylate resins, polyether ether ketone resins, polystyrene resins, rubber-reinforced polystyrene resins, or syndiotactic polystyrene resins. One kind of the synthetic resins may be used singly or two or more kinds thereof may be used in combination.

Note that as used herein, the term "(meth)acrylonitrile" means "acrylonitrile or methacrylonitrile".

In addition, examples of the synthetic resin preferably used include a polyolefin resin such as polyethylene, polypropylene, polybutene-1, polyhexene-1, poly-3-methyl-butene-1, poly-4-methyl-pentene-1, a copolymer of ethylene and one or two or more different $C_{3-20}$ $\alpha$-olefins (e.g., propylene, 1-butene, 1-pentene, 1-hexene, 1-heptene, 1-octene, 1-decene, 3-methyl-1-butene, 4-methyl-1-pentene, 6-methyl-1-heptene, isooctene, isooctadiene, decadiene), an ethylene-propylene-diene copolymer (EPDM), an ethylene-vinyl acetate copolymer, or an ethylene-acrylic acid copolymer.

The layer formed of the synthetic resin may be further optionally admixed with additives (e.g., a heat stabilizer, a light stabilizer, a UV absorber, an antioxidant, a lubricant, a colorant, an antistatic agent, a flame retardant, a water repellent, a waterproof agent, a hydrophilicity imparting agent, a conductivity imparting agent, a thermal conductivity imparting agent, an electromagnetic wave shielding property imparting agent, a translucency modifier, a fluorescent agent, a slidability imparting agent, a transparency imparting agent, an anti-blocking agent, a metal inactivating agent, an antimicrobial) within a range not impairing the purpose of the present invention.

The ceramic used in the laminated structure of the present invention means a nonmetallic inorganic material, and examples thereof include a metal oxide, a metal carbide, or a metal nitride. Examples thereof include glass, cements, alumina, zirconia, zinc oxide-based ceramics, barium titanate, lead zirconate titanate, silicon carbide, silicon nitride, or ferrites.

Examples of the metal used in the laminated structure of the present invention include iron, copper, aluminum, magnesium, nickel, chromium, zinc, or an alloy containing them as components. In addition, it is possible to use, as the layer formed of metal, a layer having a surface formed by plating such as copper plating, nickel plating, chromium plating, tin plating, zinc plating, platinum plating, gold plating, or silver plating.

The texture type of fabric used for the laminated structure of the present invention is not particularly limited, and examples thereof include a woven fabric, a knitted fabric, a felt, or a nonwoven fabric. The material of the fabric may be made of natural fibers, synthetic fibers, or natural fibers and synthetic fibers. Examples of the natural fibers include, but are not particularly limited to, one or two or more kinds selected from the group consisting of cotton, silk, hemp, and hair.

Further, the synthetic fiber is preferably at least one kind selected from the group consisting of polyester fibers, acrylic fibers (polyacrylonitrile), polyurethane fibers, polyamide fibers, polyolefin fibers, and vinylon fibers. Examples of the polyamide fibers include nylon 6 or nylon 66. Examples of the polyolefin fibers include polyethylene fibers or polypropylene fibers.

As a material other than the thermoplastic elastomer composition, a synthetic resin or a metal is preferable from the viewpoint of further exerting the effect of the present invention, such as excellent strength of adhesion.

The method for producing a laminated structure according to the present invention is not particularly limited. The layer formed of the thermoplastic elastomer composition of the present invention is preferably produced by melt

lamination molding on the layer formed of the other material. Examples thereof include a molding method such as an injection insert molding method, a dichroic molding method, an extrusion lamination method, a coextrusion molding method, a calendar molding method, a slush molding method, a press molding method, or a melt casting method.

For example, a laminated structure may be produced by an injection insert molding method. In this case, the laminated structure can be produced by disposing, in a mold, an adherend (a layer formed of a material other than the thermoplastic elastomer composition of the present invention) formed in a predetermined shape and dimension in advance, and injection-molding the thermoplastic elastomer composition of the present invention on the adherend. In addition, a laminated structure may be produced by an extrusion lamination method. In this case, the laminated structure can be produced by directly extruding, on a surface of an adherend formed in a predetermined shape and dimension in advance or on an edge thereof, the thermoplastic elastomer composition of the present invention in a molten state, which composition has been extruded from a die having a predetermined shape and attached to an extruder. Also, a laminated structure may be produced by a coextrusion molding method. In this case, the laminated structure can be produced by using two extruders to extrude the thermoplastic elastomer composition of the present invention and a synthetic resin other than the thermoplastic elastomer composition that have been simultaneously dissolved. Further, a laminated structure may be produced by a calendar molding method. In this case, the laminated structure can be produced by thermally fusing the thermoplastic elastomer composition of the present invention, as melted and rolled with a heating roll and brought into a molten state through several rolls, to the surface of an adherend formed in a predetermined shape and dimension in advance. Furthermore, a laminated structure may be produced by a press molding method. In this case, the laminated structure may be produced by beforehand molding a molding formed of the thermoplastic elastomer composition of the present invention by an injection molding method or an extrusion molding method, and by heating and pressing the molding on an adherend formed in advance in a predetermined shape and dimension while using, for instance, a press molding machine. The press molding method is particularly suitable when the adherend is made of ceramic or metal.

As the molding method using melt lamination molding, an injection insert molding method is preferable. The injection molding temperature in the injection insert molding method is not particularly limited, but is preferably 150°C or higher, more preferably 200°C or higher, and still more preferably 250°C or higher from the viewpoint of obtaining sufficient adhesion.

Meanwhile, when the adherend is a polar resin or a polyolefin resin, a laminated structure can be produced by simultaneously melting both resins and performing coextrusion molding or co-injection molding. In addition, the laminated structure can be produced by molding one layer in advance, and melt-coating or solution-coating a component to be another layer thereon. Further, the laminated structure can also be produced by, for instance, dichroic molding or insert molding.

The thermoplastic elastomer composition, molding, and laminated structure as obtained in the present invention can be widely applied to various applications. For example, a synthetic resin, a glass fiber-containing synthetic resin, or a light metal (e.g., aluminum, a magnesium alloy) is used for a housing material (e.g., an electronic or electric device, an OA device, a household electric appliance, an electric power tool, an automobile member). Here, it is possible to use a laminated structure in which the thermoplastic elastomer composition of the present invention is bonded to each housing material. More specifically, the thermoplastic elastomer composition of the present invention is bonded to a housing (e.g., a large display, a notebook personal computer, a mobile phone, a PHS, a PDA (portable information terminal such as an electronic notebook), an electronic dictionary, a video camera, a digital still camera, a portable audio device, an inverter). It is preferable for applications such as an impact mitigating material, a covering material having an anti-slip function, a waterproof material, or a design material.

In addition, it is useful for a wide range of applications as a molding or a structure bonded to glass (e.g., window moldings and gaskets for automobiles and buildings, glass sealing materials, antiseptic materials). It can also be suitably used as a sealant for, a joint portion between glass and an aluminum sash or for, for example, a metal opening portion in a window of an automobile or a building, or for example, a connection portion between glass and a metal frame in, for example, a solar cell module. Further, it can also be suitably used for, for example, various information terminal devices such as notebook personal computers, mobile phones, and video cameras, or separators of secondary batteries used for hybrid automobiles, fuel cell automobiles, and other automobiles.

Examples of the various applications that can be suitably used include: food packaging materials (e.g., food packaging sheets, cap liners); daily goods (e.g., toothbrushes, cosmetic cases); sporting goods (e.g., ski shoes, skis, underwater glasses, swimming goggles, outer skins and core materials of golf balls); toys; stationery (e.g., pen grips, desk mats); automobile interior parts (e.g., instrument panels, center panels, center console boxes, door trims, pillars, assist grips, handles, knobs, air back covers); automotive interior and exterior parts (e.g., bumper guards, moldings); automotive functional parts (e.g., rack & pinion boots, suspension boots, constant velocity joint boots); automotive electrical and electronic components (e.g., curl cord wire coating, various belts, hoses, tubes, silencing gears); civil engineering and construction applications (e.g., civil engineering sheets, waterproof sheets, window frame sealants, building sealants, various hoses, knobs); cleaner bumpers; refrigerator door seals; underwater use products (e.g., underwater camera covers); home appliance applications (e.g., remote control switches, OA equipment); AV device applications (e.g., connector bobbins, various switches); OA office equipment applications; various cover components; various packing-attached industrial parts for, for example, sealing, waterproof, soundproofing, or vibration-proof purposes; masks (e.g., dustproof masks); industrial applications (e.g., conveyance trays for precision parts, automatic machine robot parts); footwear and clothing applications (e.g., shoe soles, top lifts); textile applications; playground equipment applications; or medical device applications.

Examples

Hereinafter, the present invention will be described with reference to Examples. The present invention, however, is not limited to these Examples. Note that in the following Production Examples, monomers and other compounds were dried and purified by a conventional procedure, and degassed with nitrogen and then used. In addition, the transfer and supply of the monomers and other compounds to the reaction system were performed under a nitrogen atmosphere. Note that various physical properties of Examples or Comparative Examples were measured or evaluated by the following procedures.

The respective components used in the Examples and Comparative Examples are as follows.

<Hydrogenated Block Copolymer (A)>

Hydrogenated block copolymers (A -1) to (A -3) of Production Examples 1 to 3 described later

<Acrylic Polymer (B)>

Acrylic block copolymers (B1-1) to (B1-6) of Production Examples 4 to 9 described later
Methacrylic acid ester-based polymer (B2-7): polymethyl methacrylate ("PARAPET GF 1000", manufactured by KURARAY CO., LTD.; a random copolymer containing methyl methacrylate as a main component and copolymerized with methyl acrylate; peak top molecular weight (Mp): 76,000; molecular weight distribution (Mw/Mn): 2.09)

<Aromatic polymer (C)>

Aromatic polymer (C-1): poly $\alpha$-methylstyrene/styrene copolymer ("CRYSTALEX 5140", manufactured by Eastman Chemical Company)

<Softening Agent (D)>

Softening agent (D-1): hydrogenated paraffinic oil ("Diana Process Oil PW-90" manufactured by Idemitsu Kosan Co., Ltd.)
Softening agent (D-2): hydrogenated paraffinic oil ("Diana Process Oil PW-380" manufactured by Idemitsu Kosan Co., Ltd.)

(Other Optional Components)

<Hydrophilic Group-Containing Block Copolymer (E)>

Hydrophilic group-containing block copolymer (E-1): "Perestat 300" (block copolymer obtained by esterifying modified polyolefin obtained by reacting polyolefin mainly composed of polypropylene with maleic anhydride and polyalkylene glycol mainly composed of polyethylene glycol in the presence of a catalyst), manufactured by Sanyo Chemical Industries, Ltd.

<Additional Thermoplastic Polymer>

Olefin-based polymer: ethylene/1-octene copolymer ("ENGAGE 8480", manufactured by The Dow Chemical Company)

Details of each measurement procedure in the Production Examples are as follows.

(1) To measure peak top molecular weight (Mp), weight average molecular weight (Mw), number average molecular

weight (Mn), molecular weight distribution (Mw/Mn), and others

The peak top molecular weight (Mp), the weight average molecular weight (Mw), and the number average molecular weight (Mn) of the hydrogenated block copolymer (A) or the acrylic polymer (B) were determined as the molecular weight in terms of standard polystyrene by GPC (gel permeation chromatography). The molecular weight distribution (Mw/Mn) was calculated from the values of Mw and Mn. Note that (Mp) is a value obtained from the position of the peak top of the chromatogram obtained by GPC measurement. A measurement apparatus and measurement conditions are as follows.

· Apparatus: GPC apparatus "GPC8020" manufactured by Tosoh Corporation
· Separating column: "TSKgel GMHXL", "G4000HXL", and "G5000HXL", manufactured by Tosoh Corporation, were connected in series
· Detector: "RI-8020" manufactured by Tosoh Corporation
• Eluent: tetrahydrofuran
• Eluent flow rate: 1.0 ml/min
• Sample concentration: 5 mg/10 ml
• Column temperature: 40°C

(2) Procedure for measuring hydrogenation rate in hydrogenated block copolymer (A)

In the following Production Examples, the block copolymer (P) and the hydrogenated block copolymer (A) after hydrogenation were each dissolved in a deuterated chloroform solvent, and $^1$H-NMR was measured at 50°C by using "Lambda-500", manufactured by JEOL Ltd. The hydrogenation rate of the carbon-carbon double bond in the polymer block (a2) of the hydrogenated block copolymer (A) was calculated from the peak of the proton of the carbon-carbon double bond appearing at 4.5 to 6.0 ppm in the obtained spectrum by using the following formula:

Hydrogenation rate (mol%) = {1 - (Number of moles of carbon-carbon double bond contained per mole of hydrogenated block copolymer (A))/(Number of moles of carbon-carbon double bond contained per mole of block copolymer (P))} × 100.

(3) To measure content of each polymer block in hydrogenated block copolymer (A)

With regard to the hydrogenated block copolymer (A), the block copolymer (e.g., the block copolymer (P)) before hydrogenation was dissolved in deuterated chloroform, and the content of each polymer block was calculated from the ratio between the peak intensity derived from styrene (aromatic vinyl compound) and the peak intensity derived from the conjugated diene while using the above-described apparatus.

(4) The content of each polymer block in the acrylic block copolymer (B1) was measured, and in the following Production Examples, the content of each polymer block in the acrylic block copolymer (B1) was determined by $^1$H-NMR measurement. The measuring apparatus and conditions used in $^1$H-NMR measurement are as follows.

· Apparatus: nuclear magnetic resonance spectrometer "JNM-ECX 400" manufactured by JEOL Ltd.
· Deuterated solvent: deuterated chloroform

In a $^1$H-NMR spectrum, signals at or near 3.6 ppm and 3.7 ppm are assigned to a hydrogen atom ($-O-C\underline{H}_3$) bonded to a carbon atom adjacent to an oxygen atom contained in an ester group of a methyl methacrylate unit and a hydrogen atom ($-O-C\underline{H}_3$) bonded to a carbon atom adjacent to an oxygen atom contained in an ester group of a methyl acrylate unit, respectively. The signals at or near 4.0 ppm are assigned to a hydrogen atom ($-O-C\underline{H}_2-CH_2-CH_2-CH_3$) bonded to a carbon atom adjacent to the oxygen atom contained in the ester group of the n-butyl acrylate unit and a hydrogen atom ($-O-C\underline{H}_2-CH(-CH_2-CH_3)-CH_2-CH_2-CH_2-CH_3$) bonded to a carbon atom adjacent to the oxygen atom contained in the ester group of the 2-ethylhexyl acrylate unit. The molar ratio between the structural units derived from each monomer was determined from the ratio of the integral values of these signals, and this was converted to a mass ratio based on the molecular weights of the structural units derived from the monomer, thereby determining the content of each polymer block.

<Hydrogenated Block Copolymer (A)>

<<Production Example 1>> (Hydrogenated Block Copolymer (A-1))

To a nitrogen-purged, dried pressure-resistant vessel were added 50.0 kg of cyclohexane as a solvent and 139.4 g of sec-butyllithium (10.5 mass% cyclohexane solution) as an anionic polymerization initiator. After the temperature was raised to 50°C, 1.87 kg of styrene (1) was added for polymerization for 1 hour. Subsequently, 4.88 kg of butadiene and 3.87 kg of isoprene were added, and polymerization was performed for 2 hours. Further, 1.87 kg of styrene (2) was added and the mixture was polymerized for 1 hour to prepare a reaction solution containing a triblock copolymer of a styrene polymer block-isoprene/butadiene polymer block-styrene polymer block. To this reaction solution, palladium carbon (amount of palladium supported: 5% by mass) as a hydrogenation catalyst was added in an amount of 5% by mass relative to the block copolymer, and the reaction was carried out for 10 hours under conditions at a hydrogen pressure of 2 MPa and 150°C. The mixture was allowed to cool and for pressure release, and then filtered to remove palladium carbon. The filtrate was concentrated and further dried in a vacuum, thereby producing a hydrogenated product of a triblock copolymer of a styrene polymer block-isoprene/butadiene polymer block-styrene polymer block (hereinafter, referred to as the hydrogenated block copolymer (A-1)). The hydrogenated block copolymer (A-1) was evaluated as described above. The results are shown in Table 1.

<<Production Example 2>> (Hydrogenated Block Copolymer (A-2))

A hydrogenated block copolymer (A-2) was produced in the same manner as in Production Example 1 except that the amount of each component added was changed according to the formulation designated in Table 1. The resulting hydrogenated block copolymer (A-2) was evaluated as described above. The results are shown in Table 1.

<<Production Example 3>> (Hydrogenated Block Copolymer (A-3))

A hydrogenated block copolymer (A-3) was produced in the same manner as in Production Example 1 except that the amount of each component added was changed according to the formulation designated in Table 1 and 76.0 g of tetrahydrofuran was added as a Lewis base. The resulting hydrogenated block copolymer (A-3) was evaluated as described above. The results are shown in Table 1.

[Table 1]

| | | Production Example 1 | Production Example 2 | Production Example 3 |
|---|---|---|---|---|
| | | A-1 | A-2 | A-3 |
| Amount used [kg] | Cyclohexane | 50 | 50 | 50 |
| | *sec*-Butyllithium | 0.1394 | 0.0307 | 0.1456 |
| | Tetrahydrofuran | --- | --- | 0.0760 |
| | Styrene (1) | 1.87 | 1.37 | 1.87 |
| | Styrene (2) | 1.87 | 1.37 | 1.87 |
| | Butadiene | 4.88 | 3.44 | 8.75 |
| | Isoprene | 3.87 | 2.73 | --- |
| Polymer block (a1) content (mass%) | | 30 | 30 | 30 |
| Polymer block (a2) content (mass%) | | 70 | 70 | 70 |
| Block copolymer (P) form (*1) | | St-(Ip/Bd)-St | St-(Ip/Bd)-St | St-Bd-St |
| Peak top molecular weight (Mp) | | 87,600 | 290,000 | 76,400 |
| Molecular weight distribution (Mw/Mn) | | 107 | 106 | 103 |
| Hydrogenation rate [mol%] (*2) | | 99.2 | 99.4 | 99.0 |

Note that the respective notations in Table 1 are as follows.

(*1): St-(Ip/Bd)-St denotes a triblock copolymer of a styrene polymer block-(isoprene/butadiene)copolymer block-styrene polymer block. St-Bd-St denotes a triblock copolymer of a styrene polymer block-butadiene polymer block-styrene polymer block.
(*2): The hydrogenation rate indicates the hydrogenation rate of the carbon-carbon double bond in the polymer block (a2).

<Acrylic Polymer (B)>

<<Production Example 4>> (Acrylic Block Copolymer (B1-1))

(1) To a nitrogen-purged, dried pressure-resistant vessel were added 46.5 kg of toluene and 0.123 kg of 1,2-dimethoxyethane with stirring at room temperature. Subsequently, 1.23 kg of a toluene solution containing 412 mmol of isobutylbis(2,6-di-t-butyl-4 methylphenoxy)aluminum was added, and 0.149 kg of a sec-butyllithium cyclohexane solution containing 206 mmol of sec-butyllithium was further added.
(2) Next, 1.80 kg of methyl methacrylate was added thereto at room temperature under stirring, and stirring was further continued for 60 minutes. The reaction solution was initially colored in yellow, but became colorless after stirring for 60 minutes.
(3) Then, the polymerization liquid was cooled to an internal temperature of -30°C, 6.06 kg of n-butyl acrylate was added dropwise under stirring over 4 hours, and after completion of the dropwise addition, stirring was further continued at -30°C for 5 minutes.
(4) Thereafter, 4.14 kg of methyl methacrylate was added thereto, and the mixture was stirred overnight at room temperature.
(5) After the polymerization reaction was stopped by adding 0.370 kg of methanol, the obtained reaction solution was poured into methanol under stirring to precipitate a white precipitate. The resulting white precipitate was collected and dried to obtain an acrylic block copolymer (B1-1) .

The peak top molecular weight (Mp) and the molecular weight distribution (Mw/Mn) of the obtained acrylic block copolymer (B1-1) were determined by the GPC measurement described above. In addition, the total content of PMMA (polymer block composed of 100 mass% of methyl methacrylate unit) as the polymer block (b2) in the acrylic block copolymer (B1-1) and the content of the polymer block (b1) were determined by the above-described $^{1}$H-NMR measurement. The results are shown in Table 2.

<<Production Examples 5 to 9>> (Acrylic Block Copolymers (B1-2) to (B1-6))

Each of acrylic block copolymers (B1-2) to (B1-6) was produced in the same manner as in Production Example 4 except that the amounts of 1,2-dimethoxyethane, isobutylbis(2,6-dit-butyl-4-methylphenoxy)aluminum, and sec-butyllithium added in step (1), the amount of monomer added in steps (2) and (4), the type and amount of the monomer(s) added in step (3), and the amount of methanol added in step (5) were changed as described in Table 2. The Mp, the Mw/Mn, and the content of each polymer block for each of the resulting acrylic block copolymers (B1-2) to (B1-6) were determined in the same manner as described above. The results are shown in Table 2.

[Table 2]

| | | | Production Example 4 | Production Example 5 | Production Example 6 |
|---|---|---|---|---|---|
| | | | B1-1 | B1-2 | B1-3 |
| Amount used [kg] | Step (1) | Toluene | 46.5 | 50.0 | 50.0 |
| | | 1,2-Dimethoxyethane | 0.123 | 0.094 | 0.0998 |
| | | Organoaluminum compound (*4) | 1.23 | 0.773 | 0.820 |
| | | *sec*-Butyllithium | 0.149 | 0.114 | 0.121 |
| | Step (2) | MMA | 1.8 | 1.29 | 1.47 |
| | Step (3) | nBA | 6.06 | 5.6 | 6.33 |
| | | MA | --- | --- | --- |
| | | 2EHA | ---- | --- | --- |
| | Step (4) | MMA | 4.14 | 2.11 | 120 |
| | Step (5) | Methanol | 0.370 | 0.349 | 0.370 |
| Polymer block (b1) content (mass%) | | | 50 | 62 | 70 |
| Polymer block (b2) content (mass%) | | | 50 | 38 | 30 |
| (b1-1)/(b1-2) (*5) | | | 0/100 | 0/100 | 0/100 |
| Acrylic block copolymer (B1) form (*6) | | | MMA - nBA - MMA | MMA - nBA - MMA | MMA - nBA - MMA |
| Peak top molecular weight (Mp) | | | 68,000 | 70,000 | 66,000 |
| Molecular weight distribution (Mw/Mn) | | | 1.13 | 1.15 | 1.17 |

(continued)

| | | | Production Example 7 | Production Example 8 | Production Example 9 |
|---|---|---|---|---|---|
| | | | B1-4 | B1-5 | B1-6 |
| Amount used [kg] | Step (1) | Toluene | 500 | 50.0 | 50.2 |
| | | 1,2-Dimethoxyethane | 0.0444 | 0.0907 | 0.0780 |
| | | Organoaluminum compound (*4) | 0.383 | 0.746 | 0.641 |
| | | *sec*-Butyllithium | 0.0538 | 0.110 | 0.0946 |
| | Step (2) | MMA | 0.610 | 0.886 | 107 |
| | Step (3) | nBA | 7.50 | 3.57 | 5.12 |
| | | MA | --- | --- | 1.28 |
| | | 2EHA | --- | 3.57 | --- |
| | Step (4) | MMA | 0.848 | 0.968 | 1.52 |
| | Step (5) | Methanol | 0.240 | 0.339 | 0.289 |
| Polymer block (b1) content (mass%) | | | 94 | 80 | 71 |
| Polymer block (b2) content (mass%) | | | 16 | 20 | 29 |
| (b1-1)/(b1-2) (*5) | | | 0/100 | 0/100 | 20/80 |
| Acrylic block copolymer (B1) form (*6) | | | MMA-nBA-MMA | MMA-(nBA/2EHA)-MMA | MMA-(nBA/MA)-MMA |
| Peak top molecular weight (Mp) | | | 152,000 | 73,000 | 82,000 |
| Molecular weight distribution (Mw/Mn) | | | 1.22 | 1.25 | 1.10 |

Note that the respective notations in Table 2 are as follows.

MMA: methyl methacrylate
nBA: n-butyl acrylate
2EHA: 2-ethylhexyl acrylate
Organoaluminum compound (*4): isobutylbis(2,6-di-t-butyl-4-methylphenoxy)aluminum

(*5): (b1-1)/(b1-2) represents the content of the structural unit derived from the acrylic acid ester (b1-1) having a $C_{1-3}$ organic group in the polymer block (b1).
(*6): MMA-nBA-MMA denotes a triblock copolymer of a methyl methacrylate polymer block-n-butyl acrylate polymer block-methyl methacrylate polymer block. MMA-(nBA/2EHA)-MMA denotes a triblock copolymer of a methyl methacrylate polymer block-(n-butyl acrylate/2-ethylhexyl acrylate)copolymer block-methyl methacrylate polymer block. MMA-(nBA/MA)-MMA denotes a triblock copolymer of a methyl methacrylate polymer block-(n-butyl acrylate/methyl acrylate)copolymer block-methyl methacrylate polymer block.

[Examples 1 to 29, Comparative Examples 1 to 9, and Reference Examples 1 to 2]

<To Prepare Thermoplastic Elastomer Composition>

The respective components listed in Table 3 or 4 were premixed according to the proportions designated in Table 3 or 4. The mixture obtained by the pre-mixing was melt-kneaded under the conditions at 200°C and a screw rotation speed of 250 rpm in a twin-screw extruder ("ZSK 25", manufactured by Coperion GmbH) to prepare a thermoplastic elastomer composition. The following physical properties of each resulting thermoplastic elastomer composition were measured. The results are shown in Tables 3 and 4.

<To Produce Laminated Structure>

Each laminated structure was produced by an injection insert molding method using the following adherend (length 100 mm × width 45 mm × thickness 1 mm) as an insert part. Each insert part was fixed in a mold of an injection molding machine ("UH 1000", manufactured by NISSEI PLASTIC INDUSTRIAL CO., LTD.); the mold temperature was then set to 40°C, and the cylinder temperature was set to 230°C; the obtained thermoplastic elastomer composition was filled in the mold; and the surface temperature of the adherend was cooled to 40°C to produce a laminated structure. The behavior of how the layer of the thermoplastic elastomer composition was detached from the obtained laminated structure was visually checked.

Note that the details of the adherend used for producing the laminated structure are as follows.

· Polycarbonate (PC) plate: trade name "Iupilon (registered trademark) S-3000", manufactured by Mitsubishi Engineering-Plastics Corporation

(1) Hardness

(1-1) To Prepare Sheet of Thermoplastic Elastomer Composition

The thermoplastic elastomer composition obtained in each of Examples or Comparative Examples was injection-molded by an injection molding machine ("SE18DU", manufactured by Sumitomo Heavy Industries, Ltd.) set at a cylinder temperature of 210°C and a mold temperature of 40°C to prepare a sheet having a length of 50 mm, a width of 50 mm, and a thickness of 3 mm.

(1-2) To Measure Hardness

Three sheets of the thermoplastic elastomer composition obtained above were stacked to prepare a test piece having a thickness of 9 mm. The hardness of the test piece was measured by an indenter of a type A durometer in accordance with JIS K6253-3:2012.

(2) To Measure Tensile Strength at Break and Tensile Strain at Break

The thermoplastic elastomer composition obtained in each of Examples or Comparative Examples was injection-molded by an injection molding machine ("SE18DU", manufactured by Sumitomo Heavy Industries, Ltd.) set at a cylinder temperature of 210°C and a mold temperature of 40°C to obtain a dumbbell No. 5 test piece in accordance with JIS K6251:2010. In accordance with JIS K6251:2010, the obtained dumbbell No. 5 test piece was subject to a tensile test using "Instron 5566", manufactured by Instron Corporation, under the condition at a tensile speed of 500 mm/min, and the tensile strength at break and the tensile strain at break were measured. The higher the numerical values of the tensile strength at break and the tensile strain at break, the better the tensile properties. The tensile strength at break is preferably 2.0 MPa or larger and more preferably 3.5 MPa or larger. In addition, the tensile strain at break is preferably 100% or larger and more preferably 150% or larger.

(3) Total Light Transmittance and Haze

In accordance with JIS K7361-1:1997, the thermoplastic elastomer composition obtained in the above (1-1) was measured for the total light transmittance and haze of a sheet having a length of 50 mm, a width of 50 mm, and a thickness of 3 mm while using a haze meter ("NDH 5000", manufactured by NIPPON DENSHOKU INDUSTRIES CO., LTD.).

(4) Gripping Performance

A sheet of the thermoplastic elastomer composition that had been obtained in the above (1-1) and had a length of 50 mm, a width of 50 mm, and a thickness of 3 mm was sandwiched between an index finger and a thumb, and the gripping performance was evaluated by tactile sensation when the sheet was slid between the fingers. The tactile sensation was evaluated according to the following criteria:

OO: Suitable for practical use, and particularly not slippery between the fingers;
O: There is no problem in practical use, and not slippery between the fingers; and
X: Dry, slippery between the fingers, and not suitable for practical use

(5) Adhesion

According to JIS K6854-2:1999, the laminated structure produced in each Example or Comparative Example was subject to a tensile peeling test using "Instron 5566", manufactured by Instron Corporation, under the conditions at a peeling angle of 180 degrees and a tensile speed of 100 mm/min to evaluate the strength of adhesion when the thermoplastic elastomer layer was peeled off from the adherend. The test was performed four times in total, and the obtained average value was taken as the peeling adhesion strength.

The laminated structure after the peeling adhesion strength test was visually observed to check whether the laminated structure was broken by material fracture, cohesive fracture, or interfacial peeling. The following criteria were used for evaluation:

OO: Fracture form is material fracture;
O: Cohesive fracture; and
X: interfacial peeling.

(6) Oleic Acid Resistance Test

A sheet of the thermoplastic elastomer composition that had been obtained in the above (1-1) and had a length of 50 mm, a width of 50 mm, and a thickness of 3 mm was immersed in oleic acid under the condition at 23°C for 168 hours, and the change in weight between before and after immersion was measured. The measurement was performed three times in total, and the measured values were averaged as the weight change rate and shown in Table 5.

[Table 3]

**Table 3**

| | | Example 1 | Example 2 | Example 3 | Example 4 | Example 5 | Example 6 | Example 7 | Example 8 |
|---|---|---|---|---|---|---|---|---|---|
| Hydrogenated block copolymer (A) (parts by mass) | (A-1) | 100 | 100 | 100 | 100 | 100 | 100 | 100 | 100 |
| | (A-2) | | | | | | | | |
| | (A-3) | | | | | | | | |
| Acrylic polymer (B) (parts by mass) | (B1-1) | | | | | | 400 | 400 | 400 |
| | (B1-2) | 1000 | 1000 | 500 | 500 | 500 | | | |
| | (B1-3) | | | | | | 100 | | |
| | (B1-4) | | | | | | | 100 | |
| | (B1-5) | | | | | | | | 100 |
| | (B1-6) | | | | | | | | |
| | (B2-7) | | | | | | | | |
| | Total | 1000 | 1000 | 500 | 500 | 500 | 500 | 500 | 500 |
| Aromatic polymer (C) (parts by mass) | (C-1) | 50 | 100 | 50 | 50 | 50 | 50 | 50 | 50 |
| Softening agent (D) (parts by mass) | (D-1) | 150 | 150 | 150 | 100 | 200 | 150 | 150 | 150 |
| | (D-2) | | | | | | | | |
| Hydrophilic group-containing block copolymer (E) (parts by mass) | (E-1) | | | | | | | | |
| Thermoplastic polymer | Ethylene/1-octane copolymer | | | | | | | | |
| (C)/(B) | | 0.050 | 0.100 | 0.100 | 0.100 | 0.100 | 0.100 | 0.100 | 0.100 |
| Hardness (Type A) | | 67 | 68 | 62 | 65 | 60 | 73 | 68 | 67 |
| Tensile strength at break (MPa) | | 7.6 | 7.7 | 6.8 | 7.2 | 6.6 | 9.1 | 8.5 | 8.4 |
| Tensile strain at break (%) | | 150 | 150 | 150 | 160 | 140 | 190 | 180 | 170 |
| Total light transmittance | | 87 | 89 | 88 | 87 | 90 | 93 | 91 | 91 |

(continued)

| | | Example 1 | Example 2 | Example 3 | Example 4 | Example 5 | Example 6 | Example 7 | Example 8 |
|---|---|---|---|---|---|---|---|---|---|
| Gripping performance | | O | O | O | O | O | O | O | O |
| PC | Adhesion | O | O | O | O | O | O | O | O |
| | | Example 9 | Example 10 | Example 11 | Example 12 | Example 13 | Example 14 | Example 15 | |
| Hydrogenated block copolymer (A) (parts by mass) | (A-1) | 100 | 100 | 100 | 100 | 100 | | | |
| | (A-2) | | | | | | 100 | | |
| | (A-3) | | | | | | | 100 | |
| Acrylic polymer (B) (parts by mass) | (B1-1) | 400 | 350 | 200 | 100 | | 200 | 200 | |
| | (B1-2) | | | | | | | | |
| | (B1-3) | | 100 | 250 | 250 | 250 | 250 | 250 | |
| | (B1-4) | | | | | | | | |
| | (B1-5) | | | | | | | | |
| | (B1-6) | 100 | | | | | | | |
| | (B2-7) | | 50 | 50 | 150 | 250 | 50 | 50 | |
| | Total | 500 | 500 | 500 | 500 | 500 | 500 | 500 | |
| Aromatic polymer (C) (parts by mass) | (C-1) | 50 | 50 | 50 | 50 | 50 | 50 | 50 | |
| Softening agent (D) (parts by mass) | (D-1) | 150 | 150 | 150 | 150 | 150 | 150 | 150 | |
| | (D-2) | | | | | | | | |
| Hydrophilic group-containing block copolymer (E) (parts by mass) | (E-1) | | | | | | | | |
| Thermoplastic polymer | Ethylene/1-octane copolymer | | | | | | | | |
| (C)/(B) | | 0.100 | 0.100 | 0.100 | 0.100 | 0.100 | 0.100 | 0.100 | |
| Hardness (Type A) | | 74 | 73 | 74 | 65 | 71 | 73 | 74 | |
| Tensile strength at break (MPa) | | 8.5 | 10 | 6.6 | 73 | 6.0 | 7.0 | 7.5 | |

(continued)

| | | Example 9 | Example 10 | Example 11 | Example 12 | Example 13 | Example 14 | Example 15 |
|---|---|---|---|---|---|---|---|---|
| Tensile strain at break (%) | | 210 | 170 | 190 | 170 | 170 | 170 | 180 |
| Total light transmittance | | 93 | 93 | 94 | 92 | 88 | 87 | 88 |
| Gripping performance | | O | O | O | O | O | O | O |
| PC | Adhesion | O | O | O | O | O | OO | OO |
| | | Example 16 | Example 17 | Example 18 | Example 19 | Example 20 | Example 21 | Example 22 |
| Hydrogenated block copolymer (A) (parts by mass) | (A-1) | | | | | 50 | 67 | |
| | (A-2) | 100 | 100 | 100 | 100 | 50 | 33 | 100 |
| | (A-3) | | | | | | | |
| Acrylic polymer (B) (parts by mass) | (B1-1) | 200 | 133 | 200 | 200 | 200 | 133 | 200 |
| | (B1-2) | | | | | | | |
| | (B1-3) | 250 | 167 | 250 | 250 | 250 | 167 | 250 |
| | (B1-4) | | | | | | | |
| | (B1-5) | | | | | | | |
| | (B1-6) | | | | | | | |
| | (B2-7) | 50 | 33 | 50 | 50 | 50 | 33 | 50 |
| | Total | 500 | 333 | 500 | 500 | 500 | 333 | 500 |
| Aromatic polymer (C) (parts by mass) | (C-1) | 50 | 33 | 50 | 50 | 50 | 50 | 50 |
| Softening agent (D) (parts by mass) | (D-1) | 200 | 200 | 150 | 150 | 150 | 150 | |
| | (D-2) | | | | | | | 150 |
| Hydrophilic group-containing block copolymer (E) (parts by mass) | (E-1) | | | 25 | 50 | | 17 | 25 |
| Thermoplastic polymer | Ethylene/1-octane copolymer | | | | | | | |

(continued)

| | | Example 16 | Example 17 | Example 18 | Example 19 | Example 20 | Example 21 | Example 22 |
|---|---|---|---|---|---|---|---|---|
| (C)/(B) | | 0.100 | 0.100 | 0.100 | 0.100 | 0.100 | 0.150 | 0.100 |
| Hardness (Type A) | | 70 | 66 | 73 | 74 | 71 | 70 | 81 |
| Tensile strength at break (MPa) | | 5.9 | 4.9 | 67 | 65 | 8 | 6 | 7.6 |
| Tensile strain at break (%) | | 150 | 140 | 190 | 210 | 200 | 230 | 190 |
| Total light transmittance | | 91 | 91 | 88 | 87 | 93 | 93 | 86 |
| Gripping performance | | OO | OO | O | O | O | OO | O |
| PC | Adhesion | OO | OO | OO | OO | O | O | OO |
| | | Example 23 | Example 24 | Example 25 | Example 26 | Example 27 | Example 28 | Example 29 |
| Hydrogenated block copolymer (A) (parts by mass) | (A-1) | | | | | | | 100 |
| | (A-2) | 100 | 100 | 100 | 100 | 100 | 100 | |
| | (A-3) | | | | | | | |
| Acrylic polymer (B) (parts by mass) | (B1-1) | 200 | 200 | 133 | 200 | 200 | 200 | |
| | (B1-2) | | | | | | | |
| | (B1-3) | 250 | 250 | 167 | | | | |
| | (B1-4) | | | | | | | |
| | (B1-5) | | | | | | | |
| | (B1-6) | | | | 250 | 250 | 250 | 200 |
| | (B2-7) | 50 | 50 | 33 | 50 | 50 | 50 | |
| | Total | 500 | 500 | 333 | 500 | 500 | 500 | 200 |
| Aromatic polymer (C) (parts by mass) | (C-1) | 50 | 50 | 50 | 50 | 50 | 50 | 20 |
| Softening agent (D) (parts by mass) | (D-1) | | | | | | 150 | 100 |
| | (D-2) | 200 | 250 | 150 | 150 | 200 | | |

(continued)

| | | Example 23 | Example 24 | Example 25 | Example 26 | Example 27 | Example 28 | Example 29 |
|---|---|---|---|---|---|---|---|---|
| Hydrophilic group-containing block copolymer (E) (parts by mass) | (E-1) | 25 | 25 | 17 | 25 | 25 | 25 | 20 |
| Thermoplastic polymer | Ethylene/1-octane copolymer | | | | | | | 30 |
| (C)/(B) | | 0.100 | 0.100 | 0.150 | 0.100 | 0.100 | 0.100 | 0.087 |
| Hardness (Type A) | | 79 | 74 | 75 | 82 | 76 | 78 | 60 |
| Tensile strength at break (MPa) | | 5.9 | 4.5 | 6.2 | 9.3 | 7.5 | 8.9 | 7.0 |
| Tensile strain at break (%) | | 140 | 130 | 190 | 330 | 250 | 320 | 600 |
| Total light transmittance | | 87 | 89 | 87 | 89 | 91 | 92 | 85 |
| Gripping performance | | OO | OO | OO | O | OO | O | OO |
| PC | Adhesion | OO | OO | OO | OO | OO | OO | OO |

[Table 4]

**Table 4**

| | | Comparative Example 1 | Comparative Example 2 | Comparative Example 3 | Comparative Example 4 | Comparative Example 5 | Comparative Example 6 |
|---|---|---|---|---|---|---|---|
| Hydrogenated block copolymer (A) (parts by mass) | (A-1) | 100 | 100 | 100 | 100 | | |
| | (A-2) | | | | | 100 | 100 |
| | (A-3) | | | | | | |
| Acrylic polymer (B) (parts by mass) | (B1-1) | | | | | 200 | 200 |
| | (B1-2) | 1000 | 1000 | 500 | 500 | | |
| | (B1-3) | | | | | 250 | 250 |
| | (B1-4) | | | | | | |
| | (B1-5) | | | | | | |
| | (B1-6) | | | | | | |
| | (B2-7) | | | | | 50 | 50 |
| | Total | 1000 | 1000 | 500 | 500 | 500 | 500 |
| Aromatic polymer (C) (parts by mass) | (C-1) | | 200 | | 100 | 100 | 100 |
| Softening agent (D) (parts by mass) | (D-1) | 150 | 150 | 150 | 150 | 150 | 200 |
| | (D-2) | | | | | | |
| Hydrophilic group-containing block copolymer (E) (parts by mass) | (E-1) | | | | | | |
| Thermoplastic polymer | Ethylene/1-octane copolymer | | | | | | |
| (C)/(B) | | 0.000 | 0.200 | 0.000 | 0.200 | 0.200 | 0.200 |
| Hardness (Type A) | | 66 | 69 | 59 | 63 | 78 | 71 |
| Tensile strength at break (MPa) | | 8 | 8 | 6 | 7 | 7 | 6 |
| Tensile strain at break (%) | | 140 | 160 | 130 | 170 | 190 | 170 |

(continued)

**Table 4**

| | | Comparative Example 1 | Comparative Example 2 | Comparative Example 3 | Comparative Example 4 | Comparative Example 5 | Comparative Example 6 |
|---|---|---|---|---|---|---|---|
| Total light transmittance | | 83 | 43 | 82 | 84 | 51 | 80 |
| Gripping performance | | O | O | O | O | O | OO |
| PC | Adhesion | O | O | O | O | OO | OO |
| | | Comparative Example 7 | Comparative Example 8 | Comparative Example 9 | Reference Example 1 | Reference Example 2 | |
| Hydrogenated block copolymer (A) (parts by mass) | (A-1) | | | | 100 | 100 | |
| | (A-2) | | | | | | |
| | (A-3) | | | | | | |
| Acrylic polymer (B) (parts by mass) | (B1-1) | 100 | | 40 | | | |
| | (B1-2) | | 100 | | | | |
| | (B1-3) | | | 50 | | | |
| | (B1-4) | | | | | | |
| | (B1-5) | | | | | | |
| | (B1-6) | | | | 50 | 50 | |
| | (B2-7) | | | 10 | | | |
| | Total | 100 | 100 | 100 | 50 | 50 | |
| Aromatic polymer (C) (parts by mass) | (C-1) | | | | 20 | 20 | |
| Softening agent (0) (parts by mass) | (D-1) | | | | 100 | 100 | |
| | (D-2) | | | | | | |
| Hydrophilic group-containing block copolymer (E) (parts by mass) | (E-1) | | | | | | |

(continued)

| | | Comparative Example 7 | Comparative Example 8 | Comparative Example 9 | Reference Example 1 | Reference Example 2 |
|---|---|---|---|---|---|---|
| Thermoplastic polymer | Ethylene/1-octane copolymer | | | | | 30 |
| (C)/(B) | | 0.000 | 0.000 | 0.000 | 0.400 | 0.400 |
| Hardness (Type A) | | 91 | 71 | 80 | 45 | 51 |
| Tensile strength at break (MPa) | | 19 | 12 | 13 | 7 | 8 |
| Tensile strain at break (%) | | 130 | 170 | 210 | 680 | 640 |
| Total light transmittance | | 92 | 92 | 92 | 91 | 87 |
| Gripping performance | | X | X | X | OO | OO |
| PC | Adhesion | O | OO | OO | O | O |

The results of Examples are collectively described in Table 3, and the results of Comparative Examples are collectively described in Table 4.

Examples 1 to 29 had higher transparency and better adhesion than Comparative Example 1 or 3 free of the aromatic polymer (C).

Comparative Examples 2 and 4 to 6, in which the mass ratio [(C)/(B)] of the aromatic polymer (C) to the acrylic polymer (B) was larger than the range of the present invention, had higher adhesion but had deteriorated transparency.

Comparative Examples 7 and 8, which consisted of the acrylic block copolymer (B1) without containing the hydrogenated block copolymer (A) as a polymer component, and Comparative Example 9, which consisted of the acrylic block copolymer (B1) and the methacrylic acid ester-based polymer (B2), had favorable transparency and adhesiveness, but had low gripping performance.

In particular, Examples 26 to 29, which contained the acrylic block copolymer (B1-6) containing a structural unit derived from the acrylic ester (b1-1) (methyl acrylate) as the polymer block (b1) in an amount of 50 parts by mass or more based on the acrylic polymer (B), had particularly preferable tensile strain at break, tensile strength at break, and strength of adhesion.

[Table 5]

| | | Example 1 | Example 3 | Example 6 | Example 9 | Example 26 | Example 27 | Example 28 | Example 29 |
|---|---|---|---|---|---|---|---|---|---|
| Hydrogenated block copolymer (A) (parts by mass) | (A-1) | 100 | 100 | 100 | 100 | | | | 100 |
| | (A-2) | | | | | 100 | 100 | 100 | |
| | (A-3) | | | | | | | | |
| Acrylic polymer (B) (parts by mass) | (B1-1) | | | 400 | 400 | 200 | 200 | 200 | |
| | (B1-2) | 1000 | 500 | | | | | | |
| | (B1-3) | | | 100 | | | | | |
| | (B1-4) | | | | | | | | |
| | (B1-5) | | | | | | | | |
| | (B1-6) | | | | 100 | 250 | 250 | 250 | 200 |
| | (B2-7) | | | | | 50 | 50 | 50 | |
| | Total | 1000 | 500 | 500 | 500 | 500 | 500 | 500 | 200 |
| Aromatic polymer (C) (parts by mass) | (C-1) | 50 | 50 | 50 | 50 | 50 | 50 | 50 | 20 |
| Softening agent (D) (parts by mass) | (D-1) | 150 | 150 | 150 | 150 | | | 150 | 100 |
| | (D-2) | | | | | 150 | 200 | | |
| Hydrophilic group-containing block copolymer (E) (parts by mass) | (E-1) | | | | | 25 | 25 | 25 | 20 |
| Thermoplastic polymer | Ethylene/1-octane copolymer | | | | | | | | 30 |
| (C)/(B) | | 0.050 | 0.100 | 0.100 | 0.100 | 0.100 | 0.100 | 0.100 | 0.087 |
| Oleic acid resistance (weight change%) | | 39 | 36 | 35 | 29 | 28 | 26 | 28 | 24 |

The results of the oleic acid resistance test are collectively described in Table 5.

Examples 1, 3, 6, 9, and 26 to 29 described in Table 5 all had a change rate of 40 mass% or less in the oleic acid immersion test, and exhibited favorable oleic acid resistance.

Industrial Applicability

Each thermoplastic elastomer composition obtained in the present invention has high hardness (e.g., A hardness of 60 to 90), excellent transparency and flexibility evaluated by the tensile strain at break, and excellent adhesion to highly polar materials. In addition, the strength when the layer formed of the thermoplastic elastomer composition is peeled off from the laminated structure of the present invention is high. Therefore, the thermoplastic elastomer composition and the laminated structure of the present invention are useful for various applications.

## Claims

1. A thermoplastic elastomer composition comprising, 100 parts by mass of a hydrogenated block copolymer (A), 185 to 1500 parts by mass of an acrylic polymer (B), 5 to 150 parts by mass of an aromatic polymer (C) excluding the hydrogenated block copolymer (A) and the acrylic polymer (B), and 70 to 300 parts by mass of a softening agent (D),

    wherein the hydrogenated block copolymer (A) is a hydrogenated product of a block copolymer (P) having two or more polymer blocks (a1) containing a structural unit derived from an aromatic vinyl compound and one or more polymer blocks (a2) containing a structural unit derived from a conjugated diene, provided that the polymer blocks (a1) have a content in a range of 3 to 45 mass%, and
    wherein a mass ratio [(C)/(B)] between the aromatic polymer (C) and the acrylic polymer (B) is from 0.01 to 0.19.

2. The thermoplastic elastomer composition according to claim 1, wherein the acrylic polymer (B) contains 35 to 100 mass% of an acrylic block copolymer (B1) having a polymer block (b1) composed of an acrylic acid ester unit and a polymer block (b2) composed of a methacrylic acid ester unit.

3. The thermoplastic elastomer composition according to claim 2, wherein the acrylic block copolymer (B1) has a peak top molecular weight in a range of 50,000 to 180,000.

4. The thermoplastic elastomer composition according to any one of claims 1 to 3, wherein the aromatic polymer (C) is a polymer containing a structural unit derived from at least one aromatic vinyl compound selected from the group consisting of styrene, $\alpha$-methylstyrene, and 4-methylstyrene.

5. The thermoplastic elastomer composition according to any one of claims 1 to 4, wherein the softening agent (D) is at least one kind selected from the group consisting of paraffinic oil, naphthenic oil, and aromatic oil.

6. The thermoplastic elastomer composition according to any one of claims 2 to 5, wherein the acrylic block copolymer (B1) has a molecular weight distribution in a range of 1.0 to 1.4.

7. The thermoplastic elastomer composition according to any one of claims 2 to 6, wherein the acrylic block copolymer (B1) is a triblock copolymer in which the polymer block (b2) is bonded to each end of the polymer block (b1).

8. The thermoplastic elastomer composition according to any one of claims 2 to 7, wherein the polymer block (b2) in the acrylic block copolymer (B1) has a content in a range of 5 to 55 mass%.

9. The thermoplastic elastomer composition according to any one of claims 2 to 8, wherein the structural unit derived from the acrylic acid ester contained in the polymer block (b1) comprises a structural unit derived from an acrylic acid ester (b1-1) represented by general formula $CH_2$=CH-COOR$^1$ (1) where R$^1$ represents a $C_{1-3}$ organic group and a structural unit derived from an acrylic acid ester (b1-2) represented by general formula $CH_2$=CH-COOR$^2$ (2) where R$^2$ represents a $C_{4-12}$ organic group, and a mass ratio (b1-1)/(b1-2) between the structural unit derived from the acrylic acid ester (b1-1) and the structural unit derived from the acrylic acid ester (b1-2) ranges from 90/10 to 5/95.

10. The thermoplastic elastomer composition according to any one of claims 1 to 9, further comprising 0.1 to 60 parts by mass of a hydrophilic group-containing block copolymer (E), where the hydrogenated block copolymer (A), the acrylic polymer (B), and the aromatic polymer (C) are excluded, based on 100 parts by mass of the hydrogenated

block copolymer (A).

**11.** A molding comprising the thermoplastic elastomer composition according to any one of claims 1 to 10.

**12.** A laminated structure comprising a layer formed of the thermoplastic elastomer composition according to any one of claims 1 to 10 and a layer formed of a material other than the thermoplastic elastomer composition.

**13.** A method for producing a laminated structure, the method comprising melt lamination molding the thermoplastic elastomer composition according to any one of claims 1 to 10 onto a layer formed of a material other than the thermoplastic elastomer composition.

## INTERNATIONAL SEARCH REPORT

International application No.
**PCT/JP2022/014113**

**A. CLASSIFICATION OF SUBJECT MATTER**

***B32B 25/04***(2006.01)i; ***B32B 27/30***(2006.01)i; ***C08L 25/02***(2006.01)i; ***C08L 53/00***(2006.01)i; ***C08L 53/02***(2006.01)i; ***C08L 91/02***(2006.01)i
FI: C08L53/02; C08L53/00; C08L25/02; C08L91/02; B32B25/04; B32B27/30 A

According to International Patent Classification (IPC) or to both national classification and IPC

**B. FIELDS SEARCHED**

Minimum documentation searched (classification system followed by classification symbols)

B32B25/04; B32B27/30; C08L25/02; C08L53/00; C08L53/02; C08L91/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2007/023932 A1 (KURARAY CO., LTD.) 01 March 2007 (2007-03-01) claims, paragraphs [0001], [0036], [0037], examples | 1-9, 11-13 |
| Y | claims, paragraphs [0001], [0004], [0006], [0028]-[0033], [0036], [0037], examples | 1-13 |
| X | JP 2019-157067 A (KURARAY CO., LTD.) 19 September 2019 (2019-09-19) claims, paragraphs [0066], [0067], [0073], examples | 1-9, 11-13 |
| Y | claims, paragraphs [0066], [0067], [0073], examples | 1-13 |
| X | JP 2006-213852 A (ASAHI KASEI CHEMICALS CORP) 17 August 2006 (2006-08-17) claims, paragraphs [0048], [0051], [0052], examples | 1, 4, 5, 11, 12 |
| E, X | WO 2022/071314 A1 (KURARAY PLASTICS CO) 07 April 2022 (2022-04-07) claims, examples | 1-13 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/014113**

| Patent document cited in search report | Publication date (day/month/year) | Patent family member(s) | Publication date (day/month/year) |
|---|---|---|---|
| WO 2007/023932 A1 | 01 March 2007 | US 2009/0105396 A1<br>claims, paragraphs [0001], [0005], [0006], [0031]-[0037], [0041], [0042], examples<br>EP 1925637 A1<br>CN 101248136 A<br>KR 10-2008-0048495 A | |
| JP 2019-157067 A | 19 September 2019 | (Family: none) | |
| JP 2006-213852 A | 17 August 2006 | (Family: none) | |
| WO 2022/071314 A1 | 07 April 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019157067 A
- JP 2020139156 A
- JP 2012502135 A
- JP 2012502136 A
- JP 2011132298 A
- JP H0693060 A
- JP H05507737 A
- JP H11335432 A
- JP 2001278985 A


### Non-patent literature cited in the description


- POLYMER HANDBOOK Forth Edition. Wiley Interscience, Inc, 1999, vol. VII, 675-714
- *Polymer Engineering and Science,* 1974, vol. 14, 147-154
- *Macromolecular Chemistry and Physics,* 2000, vol. 201, 1108-1114